# EUROPEAN PATENT APPLICATION

(11) **EP 4 344 329 A1**
(43) Date of publication of application: **27.03.2024**
(21) Application number: 22819546.7
(22) Date of filing: 08.06.2022
(51) Int. Cl.: H04W 74/00, H04W 72/14, H04W 28/06, H04L 69/22, H04L 69/06

(54) **COMMUNICATION METHOD AND APPARATUS**

(30) Priority: 10.06.2021 CN 202110648952
(71) Applicant: Huawei Technologies Co., Ltd., Shenzhen, Guangdong 518129 (CN)
(72) Inventor: WANG, Jun, Shenzhen, Guangdong 518129 (CN); LYU, Yongxia, Shenzhen, Guangdong 518129 (CN); WANG, Ting, Shenzhen, Guangdong 518129 (CN); ZHANG, Liqing, Shenzhen, Guangdong 518129 (CN); MA, Jianglei, Shenzhen, Guangdong 518129 (CN)
(74) Representative: Maiwald GmbH
(86) International application number: PCT/CN2022/097525
(87) International publication number: WO 2022/257949

(57) **Abstract**

This application provides a communication method and apparatus. The communication method includes: determining a first format, where the first format includes a logical channel identifier, the logical channel identifier corresponds to a length value of a media access control service data unit, and the first format is a subheader format of the media access control service data unit; and sending the media access control service data unit based on the first format. According to the communication method and the apparatus in embodiments of this application, a newly defined MAC subheader format is for reducing subheader overheads corresponding when a packet is transmitted at a MAC layer, to reduce air interface overheads and processing latency, thereby meeting low-latency and high-reliability communication requirements.

## Description

This application claims priority to Chinese Patent Application No. 202110648952.4, filed with the China National Intellectual Property Administration on June 10, 2021 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

With continuous development of mobile communication technologies, low latency and high reliability are widely required in fields such as autonomous driving, industrial manufacturing, and internet of vehicles. Different scenarios have different requirements on latency, reliability, and bandwidth.

Requirements for low latency and high reliability in an industrial manufacturing scenario are the most challenging. A manufacturing device in a smart factory is connected to an enterprise cloud or an onsite control system through 5th generation (5th generation, 5G) to collect onsite environment data and production data, and analyze a production status in real time, thereby implementing wireless production of an entire production line. Intelligent industrial manufacturing has high requirements on technical performance, and high-end manufacturing has high requirements on a delay and stability of workshop equipment.

However, in a new radio (new radio, NR) protocol stack, when each application packet is transmitted at a media access control (medium access control, MAC) layer, a corresponding subheader overhead needs to be added, resulting in excessively high air interface overheads and possibly causing longer processing latency. Therefore, how to reduce air interface overheads and processing latency is an urgent problem to be resolved.

### SUMMARY

This application provides a communication method and apparatus, to reduce air interface overheads and processing latency.

According to a first aspect, a communication method is provided. The method may be performed by a terminal device, or may be performed by a chip or a circuit disposed in the terminal device. This is not limited in this application.

The method may include: determining a first format, where the first format includes a logical channel identifier, the logical channel identifier corresponds to a length value of a media access control service data unit, and the first format is a subheader format of the media access control service data unit; and sending the media access control service data unit based on the first format.

According to the implementation provided in this application, a media access control MAC subheader format is newly defined, and a length value L field of the media access control service data unit is not carried, so that subheader overheads of a MAC subheader can be reduced, thereby reducing air interface overheads and processing latency.

It should be understood that, in this implementation, the logical channel identifier (for example, LCID) corresponds to the length value (for example, L) of the media access control service data unit (MAC service data unit, MAC SDU), indicating that the LCID uniquely corresponds to L. In other words, when the first format does not include L but includes the LCID, a network device may uniquely determine a value of L based on the LCID of the MAC SDU.

For example, a logical channel identifier is in a one-to-one correspondence with a length value of a media access control service data unit, and one logical channel identifier indicates a length value of one media access control service data unit.

With reference to the first aspect, in some implementations of the first aspect, before the sending the media access control service data unit, the method further includes: receiving first configuration information, where the first configuration information indicates that the length value of the media access control service data unit corresponds to the logical channel identifier.

With reference to the first aspect, in some implementations of the first aspect, before the sending the media access control service data unit, the method further includes: sending first information, where the first information indicates that the length value of the media access control service data unit corresponds to the logical channel identifier.

With reference to the first aspect, in some implementations of the first aspect, first indication information is sent, where the first indication information indicates a service mode, for example, a traffic pattern, and the length value of the media access control service data unit corresponding to the service mode is fixed.

With reference to the first aspect, in some implementations of the first aspect, when the length value of the media access control service data unit changes, the method includes: receiving second configuration information, where the second configuration information indicates that an updated length value of the media access control service data unit corresponds to the logical channel identifier.

With reference to the first aspect, in some implementations of the first aspect, second information is sent, where the second information indicates that the service mode changes, and the second information includes that the updated length value of the media access control service data unit or a size of an application layer packet corresponds to the logical channel identifier.

It should be understood that the terminal device may directly use a service mode (traffic pattern) in UE assistance information (UE assistance information, UAI), to enable a base station to learn that data corresponding to an LCH ID of the UE is a periodic service. For example, the UE reports generation time of a packet, a periodicity of a service/packet, and a size/rate of the packet.

In this embodiment of this application, the service mode includes a data length. For example, in an uplink, data enters a UE MAC layer by passing through a UE service data adaptation protocol (UE service data adaptation protocol, UE SDAP) layer, a UE packet data convergence protocol (UE packet data convergence protocol, UE PDCP) layer, and a UE radio link control (UE radio link control, RLC) layer. The UE MAC layer uses an RLC PDU as a MAC SDU and adds a MAC subheader to generate a MAC subPDU; and cascades a plurality of MAC subPDUs (if a plurality of APP packets need to be sent at the same time, MAC subPDUs corresponding to a plurality of MAC SDUs are generated; or if a MAC CE needs to be sent, MAC subPDUs corresponding to the MAC CE are generated) to generate a MAC PDU, and delivers the MAC PDU to a UE PHY layer.

With reference to the first aspect, in some implementations of the first aspect, the first format further includes a type and/or a quantity of cascaded media access control service data units.

For example, the first format includes a type (B(O)), where "O" is optional, and B(O) indicates that the type is optional in the first format. That is, if as defined in a standard, only one format is supported and the format is a new format, a field B does not need to be defined. On the contrary, if as defined in a standard, a plurality of formats are supported, a field B needs to be defined.

This type indicates whether the MAC subheader format is a new format or an old format, and is indicated by adding 1 bit. For example, "1" indicates that the first format is a newly defined format (R/LCID, B(O)/LCID/N, or the like), and "0" indicates that the first format is an existing MAC subheader format in a protocol.

With reference to the first aspect, in some implementations of the first aspect, N cascaded media access control service data units are sent based on the first format, where the N cascaded media access control service data units correspond to the first format, and N is a positive integer greater than or equal to 1.

It should be understood that, in this implementation, the N cascaded media access control service data units correspond to the first format. This indicates that MAC subheader formats of the N MAC SDUs are all the first format, that is, the N MAC SDUs share the first format.

With reference to the first aspect, in some implementations of the first aspect, a media access control protocol data unit (MAC protocol data unit, MAC PDU) is sent based on the first format and the N cascaded media access control service data units.

Uplink UL transmission is used as an example to describe how the UE determines a MAC subheader format to be used to send the MAC SDU (DL transmission and implementation for a gNB are not discussed).

Implementation 1 and implementation 2: A new subheader (R/LCID) is used.

The standard supports only the new format, and does not support the old format. Therefore, a transmitter and a receiver can select only the new format without additional judgment.

Implementation 3: A new subheader (B(O)/LCID/N) is used.

If a length L of the MAC SDU to be sent is the same as default L corresponding to the LCID of the MAC SDU, the new format is used; otherwise, the old format originally defined in the standard is used.

Implementation 4: A first-level subheader (B(O)/L/N), and a second-level subheader (LCID) are used.

In one transport block (transport block, TB) transmission, if a quantity of MAC SDUs that can be cascaded (that is, MAC SDUs with same L) is greater than M, or is greater than or equal to M (M is preconfigured by the base station for the UE), this format is used (if the format is defined in the standard); otherwise, the implementation 4 is not used (the implementation 1, 2, or 3, or an old format defined in the standard may be used).

According to a second aspect, a communication method is provided. The method may be performed by a network device, or may be performed by a chip or a circuit disposed in the network device. This is not limited in this application.

The method may include: receiving a media access control service data unit, where the media access control service data unit corresponds to a first format, the first format includes a logical channel identifier, the logical channel identifier corresponds to a length value of the media access control service data unit, and the first format is a subheader format of the media access control service data unit; and parsing the media access control service data unit based on the first format.

According to the implementation provided in this application, a media access control MAC subheader format is newly defined, and a length value L field of the media access control service data unit is not carried, so that subheader overheads of a MAC subheader can be reduced, thereby reducing air interface overheads and processing latency.

With reference to the second aspect, in some implementations of the second aspect, before the receiving a media access control service data unit, the method further includes: determining first configuration information, where the first configuration information indicates that the length value of the media access control service data unit corresponds to the logical channel identifier; and sending the first configuration information.

With reference to the second aspect, in some implementations of the second aspect, before the receiving a media access control service data unit, the method further includes: receiving first information, where the first information indicates that the length value of the media access control service data unit corresponds to the logical channel identifier.

With reference to the second aspect, in some implementations of the second aspect, first indication information is received, where the first indication information indicates a service mode, and the length value of the media access control service data unit corresponding to the service mode is fixed.

With reference to the second aspect, in some implementations of the second aspect, when the length value of the media access control service data unit changes, the method includes: sending second configuration information, where the second configuration information indicates that an updated length value of the media access control service data unit corresponds to the logical channel identifier.

With reference to the second aspect, in some implementations of the second aspect, second information is received, where the second information indicates that the service mode changes, and the second information includes that the updated length value of the media access control service data unit or a size of an application layer packet corresponds to the logical channel identifier.

With reference to the second aspect, in some implementations of the second aspect, the parsing the media access control service data unit based on the first format includes:

with reference to the second aspect, in some implementations of the second aspect, determining the first configuration information and/or the first indication information based on the logical channel identifier; determining the length value of the media access control service data unit based on the first configuration information and/or the first indication information; and parsing the media access control service data unit based on the logical channel identifier and the length value of the media access control service data unit. The first format further includes a type and/or a quantity of cascaded media access control service data units.

With reference to the second aspect, in some implementations of the second aspect, the parsing the media access control service data unit based on the first format includes: determining, based on the type, that the subheader format of the media access control service data unit is the first format; and parsing the media access control service data unit based on the logical channel identifier, the length value of the media access control service data unit, and the type and/or the quantity of cascaded media access control service data units.

With reference to the second aspect, in some implementations of the second aspect, N cascaded media access control service data units are received, where the N cascaded media access control service data units correspond to the first format, and N is a positive integer greater than or equal to 1.

According to a third aspect, a communication method is provided. The method may be performed by a terminal device, or may be performed by a chip or a circuit disposed in the terminal device. This is not limited in this application.

The method may include: determining a second format, where the second format includes a length value of a media access control service data unit, and the second format is a subheader format corresponding to the media access control service data unit; and sending the media access control service data unit in a first grant slot based on the second format, where the first grant slot is in a one-to-one correspondence with a logical channel identifier.

According to the implementation provided in this application, a media access control MAC subheader format is newly defined, and no logical channel identifier is carried, so that subheader overheads of a MAC subheader can be reduced, thereby reducing air interface overheads and processing latency.

With reference to the third aspect, in some implementations of the third aspect, second indication information is sent, where the second indication information indicates that the first grant slot is in a one-to-one correspondence with the logical channel identifier.

It should be understood that the second indication information may be an explicit indication or an implicit indication.

For example, the second indication information may indicate that the first grant (grant) slot (for example, 1 ms) uniquely corresponds to the logical channel identifier (for example, a URLLC LCH ID). In other words, the slot is not allowed to be preempted and is for sending data and/or a MAC CE corresponding to another logical channel identifier. A grant-free (grant free, GF) resource is bound to the LCH ID. A specific grant slot can be for transmitting data only on a specific LCH. To be specific, the first slot is only for sending the MAC SDU corresponding to the LCH ID. Therefore, each time when sending data, a transmitter selects only a new format that does not explicitly carry the logical channel identifier for transmission.

Optionally, in another implementation, the first grant slot may also be for sending data and/or a MAC CE corresponding to another logical channel identifier LCID, but the LCID needs to be explicitly carried. Therefore, each time when sending data, the transmitter needs to first determine whether an LCID corresponding to the slot is the same as the LCID corresponding to the to-be-transmitted MAC SDU. If the LCIDs are the same, a subheader format that does not explicitly carry the LCID is for transmission; otherwise, a subheader format that explicitly carries the LCID is for transmission. Correspondingly, when receiving the second indication information, a receiver first determines a specific format to which the subheader format of the MAC SDU belongs, and further performs parsing based on the MAC subheader format.

If the format does not explicitly carry the LCID, a corresponding default LCID is searched in a transmission slot, where the default LCID is used as the LCID corresponding to the MAC SDU or the MAC CE, and then further processing is performed based on the LCID.

If the format explicitly carries the LCID, the LCID is used as the LCID corresponding to the MAC SDU or the MAC CE, and further processing (for example, sending the LCID to an upper-layer RLC entity/PDCP entity corresponding to the LCID) is performed based on the LCID. It should be noted that a first grant resource may be a single resource for dynamic grant (dynamic grant, DG) scheduling, or may be a periodic resource for configured grant (configured grant, CG) scheduling or semi-persistent scheduling (semi-persistent scheduling, SPS).

With reference to the third aspect, in some implementations of the third aspect, the second format further includes a type and/or a quantity of cascaded media access control service data units.

Uplink UL transmission is used as an example to describe how the UE determines a MAC subheader format to be used to send the MAC SDU (DL transmission and implementation for a gNB are not discussed).

Implementation 1: A new subheader (B(O)/LCID/N) is used, and the MAC SDU supports cascading.

In one transport block (transport block, TB) transmission, if a quantity of MAC SDUs that can be cascaded (that is, MAC SDUs with same LCID) is greater than M, or is greater than or equal to M (M is preconfigured by the base station for the UE), the new format is used (if the format is defined in the standard).

Implementation 2: A new subheader (B(O)/N) is used, and the MAC SDU supports cascading.

In one time of transport block TB transmission, if a quantity of MAC SDUs that can be cascaded is greater than M, or is greater than or equal to M (M is preconfigured by the base station for the UE), and an LCID corresponding to the grant slot is the same as the LCID of the to-be-transmitted MAC SDU, the new format is used (if the format is defined in the standard).

Implementation 3: A new subheader (B(O)/L) is used, and the MAC SDU does not support cascading.

If an LCID corresponding to the grant slot is the same as the LCID of the to-be-transmitted MAC SDU, the new format is used (if the format is defined in the standard).

According to a fourth aspect, a communication method is provided. The method may be performed by a network device, or may be performed by a chip or a circuit disposed in the network device. This is not limited in this application.

The method may include: receiving a media access control service data unit in a first grant slot, where the media access control service data unit corresponds to a second format, the second format includes a length value of the media access control service data unit, the first grant slot is in a one-to-one correspondence with a logical channel identifier, and the second format is a subheader format corresponding to the media access control service data unit; and parsing the media access control service data unit based on the second format, and sending the media access control service data unit to a data radio bearer (data radio bearer, DRB) entity or an RLC/PDCP entity corresponding to an upper layer.

According to the implementation provided in this application, a media access control MAC subheader format is newly defined, and no logical channel identifier is carried, so that subheader overheads of a MAC subheader can be reduced, thereby reducing air interface overheads and processing latency.

With reference to the fourth aspect, in some implementations of the fourth aspect, second indication information is received, where the second indication information indicates that the first grant slot is in a one-to-one correspondence with the logical channel identifier.

It should be understood that the second indication information may be an explicit indication or an implicit indication.

For example, the second indication information may indicate that the first grant (grant) slot (for example, 1 ms) uniquely corresponds to the logical channel identifier (for example, a URLLC LCH ID). In other words, the slot is not allowed to be preempted and is for sending data and/or a MAC CE corresponding to another logical channel identifier. A grant-free (grant free, GF) resource is bound to the LCH ID. A specific grant slot can be for transmitting data only on a specific LCH. That is, the first slot is only for sending the MAC SDU corresponding to the LCH ID.

Optionally, in another implementation, the first grant slot may also be for sending data and/or a MAC CE corresponding to another logical channel identifier LCID, but the LCID needs to be explicitly carried. Correspondingly, when receiving the second indication information, a receiver first determines a specific format to which the subheader format of the MAC SDU belongs, and further performs parsing based on the MAC subheader format.

If the format does not explicitly carry the LCID, a corresponding default LCID is searched in a slot, where the default LCID is used as the LCID corresponding to the MAC SDU or the MAC CE, and then further processing is performed based on the LCID.

If the format explicitly carries the LCID, the LCID is used as the LCID corresponding to the MAC SDU or the MAC CE, and further processing (for example, sending the LCID to an upper-layer RLC entity/PDCP entity corresponding to the LCID) is performed based on the LCID.

With reference to the fourth aspect, in some implementations of the fourth aspect, the parsing the media access control service data unit based on the second format includes: determining the logical channel identifier based on the first grant slot, where the logical channel identifier corresponds to the media access control service data unit; and parsing the media access control service data unit based on the logical channel identifier and the length value of the media access control service data unit.

With reference to the fourth aspect, in some implementations of the fourth aspect, the second format further includes a type and/or a quantity of cascaded media access control service data units.

With reference to the fourth aspect, in some implementations of the fourth aspect, the parsing the media access control service data unit based on the second format includes: determining, based on the type, that the subheader format of the media access control service data unit is the second format; and parsing the media access control service data unit based on the logical channel identifier, the length value of the media access control service data unit, and the type and/or the quantity of cascaded media access control service data units.

According to a fifth aspect, a communication method is provided. The method may be performed by a terminal device, or may be performed by a chip or a circuit disposed in the terminal device. This is not limited in this application.

The method may include: determining a third format, where the third format includes a quantity of cascaded media access control service data units, and the third format corresponds to N cascaded media access control service data units; and sending the N cascaded media access control service data units based on the third format, where N is a positive integer greater than or equal to 1.

According to the implementation provided in this application, a media access control MAC subheader format is newly defined, and a logical channel identifier and a length value of the media access control service data unit are not carried, so that subheader overheads of a MAC subheader can be reduced, thereby reducing air interface overheads and processing latency.

With reference to the fifth aspect, in some implementations of the fifth aspect, the third format further includes a type, a logical channel identifier, and/or a length value of the media access control service data unit.

With reference to the fifth aspect, in some implementations of the fifth aspect, N cascaded media access control protocol data units are sent based on the third format and the N cascaded media access control service data units.

With reference to the fifth aspect, in some implementations of the fifth aspect, before the sending the N cascaded media access control service data units, the method further includes: receiving second configuration information, where the second configuration information indicates that the length value of the media access control service data unit corresponds to the logical channel identifier.

With reference to the fifth aspect, in some implementations of the fifth aspect, the sending the N cascaded media access control service data units based on the third format includes: sending the N cascaded media access control service data units in a second grant slot based on the third format, where the second grant slot corresponds to the logical channel identifier.

Uplink UL transmission is used as an example to describe how the UE determines a MAC subheader format to be used to send the MAC SDU.

Implementation 1: A new subheader (B(O)/LCID/N/L) is used.

In one time of transport block TB transmission, if a quantity of MAC SDUs that can be cascaded (that is, having a same LCID and same L) is greater than M, or is greater than or equal to M (M is preconfigured by the base station for the UE), the new format is used (if the format is defined in the standard).

Implementation 2: A new subheader (B(O)/LCID/N) is used.

Similar to the definition in the implementation 1, but the MAC SDUs that can be cascaded are defined as: MAC SDUs having the same LCID and L, where L of the MAC SDUs is the same as default L corresponding to the LCID.

Implementation 3: A new subheader (B(O)/N) is used.

Similar to the definition in the implementation 2, but the MAC SDUs that can be cascaded are defined as: MAC SDUs having the same LCID and L, where L of the MAC SDUs is the same as default L corresponding to the LCID, and the LCID of the MAC SDUs is the same as an LCID corresponding to the grant slot.

Implementation 4: A new subheader (cascading is not supported) is used.
(A) If non-cascading is used (a standard supports a cascading format, but a cascading condition is not satisfied (for example, a quantity of MAC SDUs that satisfy the cascading condition is less than M, or is less than or equal to M); or a standard does not support a cascading format), LCIDs of the MAC SDUs are the same as an LCID corresponding to the grant slot, and L of the MAC SDUs is the same as default L corresponding to the LCID, the new format is used.
(B) An old format defined in an existing standard is used.
(C) A non-cascading (a standard supports a cascading format, but a cascading condition is not satisfied (for example, a quantity of MAC SDUs that satisfy the cascading condition is less than M, or is less than or equal to M); or a standard does not support a cascading format), and LCIDs of the MAC SDUs are different from an LCID corresponding to the grant slot (if configuration of the LCID and default L is supported), or an LCID is always carried (if configuration of the LCID and default L is not supported) and L of the MAC SDUs is the same as default L corresponding to the LCID, the new format is used.

Manner 5: Anew subheader (B(O)/N/L, B(O)/N, or B(O)/N/L/L...) is used.
(A) When the subheader format is B(O)/N/L, and a quantity of MAC SDUs that satisfy a cascading condition is greater than M, or is greater than or equal to M (optionally, M is configured by the base station for the UE), the new format is selected (A cascading condition is met: To-be-cascaded MAC SDUs have same L, and a corresponding LCID is the same as an LCID corresponding to the grant slot).
(B) When the subheader format is B(O)/N, the case is the same as A (A cascading condition is met: LCIDs of to-be-cascaded MAC SDUs are the same as an LCID corresponding to the grant slot).
(C) When the subheader format is B(O)/N/L/L..., the case is the same as B.

According to a sixth aspect, a communication method is provided. The method may be performed by a network device, or may be performed by a chip or a circuit disposed in the network device. This is not limited in this application.

The method may include: receiving a media access control service data unit, where the media access control service data unit corresponds to a third format, the third format includes a quantity of cascaded media access control service data units, the third format corresponds to N cascaded media access control service data units, and N is a positive integer greater than or equal to 1; and parsing the N cascaded media access control service data units based on the third format.

According to the implementation provided in this application, a media access control MAC subheader format is newly defined, and a logical channel identifier and a length value of the media access control service data unit are not carried, so that subheader overheads of a MAC subheader can be reduced, thereby reducing air interface overheads and processing latency.

With reference to the sixth aspect, in some implementations of the sixth aspect, N cascaded media access control protocol data units are received based on the third format and the N cascaded media access control service data units.

With reference to the sixth aspect, in some implementations of the sixth aspect, the third format further includes a type, a logical channel identifier, and/or a length value of the media access control service data unit.

With reference to the sixth aspect, in some implementations of the sixth aspect, before the receiving a media access control service data unit, the method further includes: determining second configuration information, where the second configuration information indicates that the length value of the media access control service data unit corresponds to the logical channel identifier; and sending the second configuration information.

With reference to the sixth aspect, in some implementations of the sixth aspect, the receiving a media access control service data unit includes: receiving the N cascaded media access control service data units in a second grant slot, where the second slot corresponds to the logical channel identifier.

With reference to the sixth aspect, in some implementations of the sixth aspect, the parsing the N cascaded media access control service data units based on the third format includes: determining the length value of the media access control service data unit based on the second configuration information; determining the logical channel identifier based on the second grant slot; determining, based on the type, that a subheader format of the media access control service data unit is the third format; and parsing the media access control service data unit based on the logical channel identifier, the length value of the media access control service data unit, and the type and/or the quantity of cascaded media access control service data units.

With reference to the first aspect to the sixth aspect, in some implementations, a manner of carrying the indication information, the configuration information, and the like may be but is not limited to one or a combination of at least two of radio resource control signaling, media access control (media access control, MAC) layer signaling, and physical (physical, PHY) layer signaling. The radio resource control signaling includes radio resource control (radio resource control, RRC) signaling, the MAC layer signaling includes a MAC control element (MAC control element, MAC CE), and the PHY layer signaling includes downlink control information (downlink control information, DCI), uplink control information (uplink control information, UCI), and the like.

Optionally, the manner of carrying the indication information, the configuration information, and the like may alternatively be but is not limited to non-access stratum (non-access stratum, NAS) signaling, SDAP layer signaling, PDCP layer signaling, RLC layer signaling, and the like.

According to a seventh aspect, a communication apparatus is provided, and includes: a processing unit, configured to determine a first format, where the first format includes a logical channel identifier, the logical channel identifier corresponds to a length value of a media access control service data unit, and the first format is a subheader format of the media access control service data unit; and a transceiver unit, configured to send the media access control service data unit based on the first format.

With reference to the seventh aspect, in some implementations of the seventh aspect, the transceiver unit is further configured to receive first configuration information, where the first configuration information indicates that the length value of the media access control service data unit corresponds to the logical channel identifier.

With reference to the seventh aspect, in some implementations of the seventh aspect, the transceiver unit is further configured to send first information, where the first information indicates that the length value of the media access control service data unit corresponds to the logical channel identifier.

With reference to the seventh aspect, in some implementations of the seventh aspect, the transceiver unit is further configured to send first indication information, where the first indication information indicates a service mode, and the length value of the media access control service data unit corresponding to the service mode is fixed.

With reference to the seventh aspect, in some implementations of the seventh aspect, the transceiver unit is further configured to receive second configuration information, where the second configuration information indicates that an updated length value of the media access control service data unit corresponds to the logical channel identifier.

With reference to the seventh aspect, in some implementations of the seventh aspect, the transceiver unit is further configured to send second information, where the second information indicates that the service mode changes, and the second information includes that the updated length value of the media access control service data unit or a size of an application layer packet corresponds to the logical channel identifier.

With reference to the seventh aspect, in some implementations of the seventh aspect, the first format further includes a type and/or a quantity of cascaded media access control service data units.

With reference to the seventh aspect, in some implementations of the seventh aspect, the transceiver unit is further configured to send N cascaded media access control service data units based on the first format, where the N cascaded media access control service data units correspond to the first format, and N is a positive integer greater than or equal to 1.

With reference to the seventh aspect, in some implementations of the seventh aspect, the transceiver unit is further configured to send a media access control protocol data unit based on the first format and the N cascaded media access control service data units.

According to an eighth aspect, a communication apparatus is provided, and includes: a transceiver unit, configured to receive a media access control service data unit, where the media access control service data unit corresponds to a first format, the first format includes a logical channel identifier, the logical channel identifier corresponds to a length value of the media access control service data unit, and the first format is a subheader format of the media access control service data unit; and a processing unit, configured to parse the media access control service data unit based on the first format.

With reference to the eighth aspect, in some implementations of the eighth aspect, the processing unit is further configured to determine first configuration information, where the first configuration information indicates that the length value of the media access control service data unit corresponds to the logical channel identifier; and the transceiver unit is further configured to send the first configuration information.

With reference to the eighth aspect, in some implementations of the eighth aspect, the transceiver unit is further configured to receive first information, where the first information indicates that the length value of the media access control service data unit corresponds to the logical channel identifier.

With reference to the eighth aspect, in some implementations of the eighth aspect, the transceiver unit is further configured to receive first indication information, where the first indication information indicates a service mode, and the length value of the media access control service data unit corresponding to the service mode is fixed.

With reference to the eighth aspect, in some implementations of the eighth aspect, the processing unit is further configured to send second configuration information, where the second configuration information indicates that an updated length value of the media access control service data unit corresponds to the logical channel identifier.

With reference to the eighth aspect, in some implementations of the eighth aspect, the processing unit is further configured to receive second information, where the second information indicates that the service mode changes, and the second information includes that the updated length value of the media access control service data unit or a size of an application layer packet corresponds to the logical channel identifier.

With reference to the eighth aspect, in some implementations of the eighth aspect, the processing unit is further configured to: determine the first configuration information and/or the first indication information based on the logical channel identifier; determine the length value of the media access control service data unit based on the first configuration information and/or the first indication information; and parse the media access control service data unit based on the logical channel identifier and the length value of the media access control service data unit.

With reference to the eighth aspect, in some implementations of the eighth aspect, the first format further includes a type and/or a quantity of cascaded media access control service data units.

With reference to the eighth aspect, in some implementations of the eighth aspect, the processing unit is further configured to: determine, based on the type, that the subheader format of the media access control service data unit is the first format; and parse the media access control service data unit based on the logical channel identifier, the length value of the media access control service data unit, and the type and/or the quantity of cascaded media access control service data units.

With reference to the eighth aspect, in some implementations of the eighth aspect, the transceiver unit is further configured to receive N cascaded media access control service data units, where the N cascaded media access control service data units correspond to the first format, and N is a positive integer greater than or equal to 1.

According to a ninth aspect, a communication apparatus is provided, and includes: a processing unit, configured to determine a second format, where the second format includes a length value of a media access control service data unit, and the second format is a subheader format corresponding to the media access control service data unit; and a transceiver unit, configured to send the media access control service data unit in a first grant slot based on the second format, where the first grant slot is in a one-to-one correspondence with a logical channel identifier.

It should be understood that the second indication information may be an explicit indication or an implicit indication.

With reference to the ninth aspect, in some implementations of the ninth aspect, the transceiver unit is configured to send second indication information, where the second indication information indicates that the first grant slot is in a one-to-one correspondence with the logical channel identifier.

It should be understood that the first indication information may be an explicit indication or an implicit indication.

For example, the second indication information may indicate that the first grant (grant) slot (for example, 1 ms) uniquely corresponds to the logical channel identifier (for example, a URLLC LCH ID). In other words, the slot is not allowed to be preempted and is for sending data and/or a MAC CE corresponding to another logical channel identifier. A grant-free (grant free, GF) resource is bound to the LCH ID. A specific grant slot can be for transmitting data only on a specific LCH. To be specific, the first slot is only for sending the MAC SDU corresponding to the LCH ID. Therefore, each time when sending data, the transmitter selects only a new format that does not explicitly carry the logical channel identifier for transmission.

Optionally, in another implementation, the first grant slot may also be for sending data and/or a MAC CE corresponding to another logical channel identifier LCID, but the LCID needs to be explicitly carried. Therefore, each time when sending data, the transmitter needs to first determine whether the LCID corresponding to the slot is the same as the LCID corresponding to the to-be-transmitted MAC SDU. If the LCIDs are the same, a subheader format that does not explicitly carry the LCID is for transmission; otherwise, a subheader format that explicitly carries the LCID is for transmission. Correspondingly, when receiving the second indication information, a receiver first determines a specific format to which the subheader format of the MAC SDU belongs, and further performs parsing based on the MAC subheader format.

If the format does not explicitly carry the LCID, a corresponding default LCID is searched in a transmission slot, where the default LCID is used as the LCID corresponding to the MAC SDU or the MAC CE, and then further processing is performed based on the LCID.

If the format explicitly carries the LCID, the LCID is used as the LCID corresponding to the MAC SDU or the MAC CE, and further processing (for example, sending the LCID to an upper-layer RLC entity/PDCP entity corresponding to the LCID) is performed based on the LCID. It should be noted that a first grant resource may be a single resource for dynamic grant (dynamic grant, DG) scheduling, or may be a periodic resource for configured grant (configured grant, CG) scheduling or semi-persistent scheduling (semi-persistent scheduling, SPS).

With reference to the ninth aspect, in some implementations of the ninth aspect, the second format further includes a type and/or a quantity of cascaded media access control service data units.

According to a tenth aspect, a communication apparatus is provided, and includes: a transceiver unit, configured to receive a media access control service data unit in a first grant slot, where the media access control service data unit corresponds to a second format, the second format includes a length value of the media access control service data unit, the first grant slot is in a one-to-one correspondence with a logical channel identifier, and the second format is a subheader format corresponding to the media access control service data unit; and a processing unit, configured to parse the media access control service data unit based on the second format, and sending the media access control service data unit to a data radio bearer (data radio bearer, DRB) entity or an RLC/PDCP entity corresponding to an upper layer.

With reference to the tenth aspect, in some implementations of the tenth aspect, the transceiver unit is further configured to receive second indication information, where the second indication information indicates that the first grant slot is in a one-to-one correspondence with the logical channel identifier.

It should be understood that the second indication information may be an explicit indication or an implicit indication.

With reference to the tenth aspect, in some implementations of the tenth aspect, the processing unit is further configured to: determine the logical channel identifier based on the first grant slot, where the logical channel identifier corresponds to the media access control service data unit; and parse the media access control service data unit based on the logical channel identifier and the length value of the media access control service data unit.

With reference to the tenth aspect, in some implementations of the tenth aspect, the second format further includes a type and/or a quantity of cascaded media access control service data units.

With reference to the tenth aspect, in some implementations of the tenth aspect, the processing unit is further configured to: determine, based on the type, that the subheader format of the media access control service data unit is the second format; and parse the media access control service data unit based on the logical channel identifier, the length value of the media access control service data unit, and the type and/or the quantity of cascaded media access control service data units.

According to an eleventh aspect, a communication apparatus is provided, and includes: a transceiver unit, configured to determine a third format, where the third format includes a quantity of cascaded media access control service data units, and the third format corresponds to N cascaded media access control service data units; and a transceiver unit, configured to send the N cascaded media access control service data units based on the third format.

With reference to the eleventh aspect, in some implementations of the eleventh aspect, the third format further includes a type, a logical channel identifier, and/or a length value of the media access control service data unit.

With reference to the eleventh aspect, in some implementations of the eleventh aspect, the transceiver unit is further configured to send N cascaded media access control protocol data units based on the third format and the N cascaded media access control service data units.

With reference to the eleventh aspect, in some implementations of the eleventh aspect, the transceiver unit is further configured to receive second configuration information, where the second configuration information indicates that the length value of the media access control service data unit corresponds to the logical channel identifier.

With reference to the eleventh aspect, in some implementations of the eleventh aspect, the transceiver unit is further configured to send the N cascaded media access control service data units in a second grant slot based on the third format, where the second grant slot corresponds to the logical channel identifier.

According to a twelfth aspect, a communication apparatus is provided, and includes: a transceiver unit, configured to receive a media access control service data unit, where the media access control service data unit corresponds to a third format, the third format includes a quantity of cascaded media access control service data units, and the third format corresponds to N cascaded media access control service data units; and a processing unit, configured to parse the N cascaded media access control service data units based on the third format.

With reference to the twelfth aspect, in some implementations of the twelfth aspect, the transceiver unit is further configured to receive N cascaded media access control protocol data units based on the third format and the N cascaded media access control service data units.

With reference to the twelfth aspect, in some implementations of the twelfth aspect, the third format further includes a type, a logical channel identifier, and/or a length value of the media access control service data unit.

With reference to the twelfth aspect, in some implementations of the twelfth aspect, the processing unit is configured to determine second configuration information, where the second configuration information indicates that the length value of the media access control service data unit corresponds to the logical channel identifier; and the transceiver unit is configured to send the second configuration information.

With reference to the twelfth aspect, in some implementations of the twelfth aspect, the transceiver unit is further configured to receive the N cascaded media access control service data units in a second grant slot, where the second slot corresponds to the logical channel identifier.

With reference to the twelfth aspect, in some implementations of the twelfth aspect, the processing unit is further configured to: determine the length value of the media access control service data unit based on the second configuration information; determine the logical channel identifier based on the second grant slot; determine, based on the type, that a subheader format of the media access control service data unit is the third format; and parse the media access control service data unit based on the logical channel identifier, the length value of the media access control service data unit, and the type and/or the quantity of cascaded media access control service data units.

With reference to the ninth aspect to the twelfth aspect, in some implementations, a manner of carrying the indication information, the configuration information, and the like may be but is not limited to one or a combination of at least two of radio resource control signaling, media access control (media access control, MAC) layer signaling, and physical (physical, PHY) layer signaling. The radio resource control signaling includes radio resource control (radio resource control, RRC) signaling, the MAC layer signaling includes a MAC control element (control element, CE), and the physical layer signaling includes downlink control information (downlink control information, DCI), uplink control information (uplink control information, UCI), and the like.

Optionally, the manner of carrying the indication information, the configuration information, and the like may alternatively be but is not limited to non-access (non-access stratum, NAS) signaling, SDAP layer signaling, PDCP layer signaling, RLC layer signaling, and the like.

According to a thirteenth aspect, a terminal device is provided. The terminal device includes a processor, and optionally, further includes a memory. The processor is configured to control a transceiver to receive and send a signal. The memory is configured to store a computer program. The processor is configured to invoke the computer program from the memory and run the computer program, so that the terminal device performs the method according to any one of the first aspect or the possible implementations of the first aspect, the method according to any one of the third aspect or the possible implementations of the third aspect, or the method according to any one of the fifth aspect or the possible implementations of the fifth aspect.

Optionally, there are one or more processors, and there are one or more memories.

Optionally, the memory may be integrated with the processor, or the memory and the processor are separately disposed.

Optionally, the terminal device further includes the transceiver, and the transceiver may be specifically a transmitter (transmitter) and a receiver (receiver).

According to a fourteenth aspect, a network device is provided. The network device includes a processor, and optionally, further includes a memory. The processor is configured to control a transceiver to receive and send a signal. The memory is configured to store a computer program. The processor is configured to invoke the computer program from the memory and run the computer program, so that the network device performs the method according to any one of the second aspect or the possible implementations of the second aspect, the method according to any one of the fourth aspect or the possible implementations of the fourth aspect, or the method according to any one of the sixth aspect or the possible implementations of the sixth aspect.

Optionally, there are one or more processors, and there are one or more memories.

Optionally, the memory may be integrated with the processor, or the memory and the processor are separately disposed.

Optionally, the network device further includes the transceiver, and the transceiver may be specifically a transmitter (transmitter) and a receiver (receiver).

According to a fifteenth aspect, a communication apparatus is provided, and includes: modules or units configured to implement the method according to any one of the first aspect or the possible implementations of the first aspect, modules or units configured to implement the method according to any one of the second aspect or the possible implementations of the second aspect, modules or units configured to implement the method according to any one of the third aspect or the possible implementations of the third aspect, modules or units configured to implement the method according to any one of the fourth aspect or the possible implementations of the fourth aspect, modules or units configured to implement the method according to any one of the fifth aspect or the possible implementations of the fifth aspect, or modules or units configured to implement the method according to any one of the sixth aspect or the possible implementations of the sixth aspect.

According to a sixteenth aspect, a communication apparatus is provided, and includes a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement the method according to any one of the first aspect to the sixth aspect or the possible implementations of the first aspect to the sixth aspect by using a logic circuit or code instructions.

According to a seventeenth aspect, a communication system is provided, and includes: a terminal device, configured to perform the method according to any one of the first aspect or the possible implementations of the first aspect, the method according to any one of the third aspect or the possible implementations of the third aspect, or the method according to any one of the fifth aspect or the possible implementations of the fifth aspect; and a network device, configured to perform the method according to any one of the second aspect or the possible implementations of the second aspect, the method according to any one of the fourth aspect or the possible implementations of the fourth aspect, or the method according to any one of the sixth aspect or the possible implementations of the sixth aspect.

According to an eighteenth aspect, a computer-readable storage medium is provided. The computer-readable storage medium stores a computer program or code. When the computer program or code is run on a computer, the computer is enabled to perform the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, the method according to any one of the fifth aspect or the possible implementations of the fifth aspect, or the method according to any one of the sixth aspect or the possible implementations of the sixth aspect.

According to a nineteenth aspect, a chip is provided, and includes at least one processor. The at least one processor is coupled to a memory, the memory is configured to store a computer program, and the processor is configured to invoke the computer program from the memory and run the computer program, to enable a terminal device in which the chip system is installed performs the method according to any one of the first aspect or the possible implementations of the first aspect, enable a network device in which the chip system is installed performs the method according to any one of the second aspect or the possible implementations of the second aspect, enable the network device in which the chip system is installed to perform the method according to any one of the third aspect or the possible implementations of the third aspect, enable the network device in which the chip system is installed to perform the method according to any one of the fourth aspect or the possible implementations of the fourth aspect, enable the network device in which the chip system is installed to perform the method according to any one of the fifth aspect or the possible implementations of the fifth aspect, and enable the network device in which the chip system is installed to perform the method according to any one of the sixth aspect or the possible implementations of the sixth aspect.

The chip system may include an input circuit or interface configured to send information or data, and an output circuit or interface configured to receive information or data.

According to a twentieth aspect, a computer program product is provided. The computer program product includes: computer program code, where when the computer program code is executed on a computer, the method according to any one of the first aspect or the possible implementations of the first aspect is performed, the method according to any one of the second aspect or the possible implementations of the second aspect is performed, the method according to any one of the third aspect or the possible implementations of the third aspect is performed, the method according to any one of the fourth aspect or the possible implementations of the fourth aspect is performed, the method according to any one of the fifth aspect or the possible implementations of the fifth aspect is performed, and the method according to any one of the sixth aspect or the possible implementations of the sixth aspect is performed.

According to the implementations of embodiments of this application, the communication method and apparatus are provided. The MAC subheader format is newly defined, MAC service data units (service data unit, SDU) that have a same packet length value and/or a same logical channel identifier (logical channel identifier, LCID) are cascaded, to reduce subheader overheads corresponding when a packet is transmitted at a MAC layer, and reduce air interface overheads and processing latency, thereby meeting low-latency and high-reliability communication requirements.

### BRIEF DESCRIPTION OF DRAWINGS

FIG. 1 is a schematic diagram of an example of a communication system to which this application is applicable;
FIG. 2 is a schematic diagram of an example of a network architecture to which this application is applicable;
FIG. 3 is a schematic diagram of an example of a user plane protocol stack and a control plane protocol stack to which this application is applicable;
FIG. 4 is a schematic diagram of an example of a media access control MAC subheader overhead to which this application is applicable;
FIG. 5 is a schematic diagram of an example of a communication method to which this application is applicable;
FIG. 6 is a schematic diagram of another example of a communication method to which this application is applicable;
FIG. 7 is a schematic diagram of another example of a media access control MAC subheader overhead to which this application is applicable;
FIG. 8 is a schematic diagram of still another example of a communication method to which this application is applicable;
FIG. 9 is a schematic diagram of still another example of a media access control MAC subheader overhead to which this application is applicable;
FIG. 10 is a schematic diagram of still another example of a communication method to which this application is applicable;
FIG. 11 is a schematic diagram of still another example of a media access control MAC subheader overhead to which this application is applicable;
FIG. 12 is a schematic diagram of an example of a communication apparatus to which this application is applicable;
FIG. 13 is a schematic diagram of another example of a communication apparatus to which this application is applicable;
FIG. 14 is a schematic diagram of an example of a terminal device to which this application is applicable; and
FIG. 15 is a schematic diagram of an example of a network device to which this application is applicable.

### DESCRIPTION OF EMBODIMENTS

The following describes technical solutions of this application with reference to accompanying drawings.

Technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, and a 5th generation (5th Generation, 5G) system or a new radio (new radio, NR) system, and may also be extended to a similar wireless communication system, for example, a wireless fidelity (wireless-fidelity, Wi-Fi) system or a cellular system related to the 3rd generation partnership project (3rd generation partnership project, 3GPP).

Usually, a conventional communication system supports a limited quantity of connections, and is easy to implement. However, with development of communication technologies, a mobile communication system not only supports conventional communication, but also supports, for example, device to device (device to device, D2D) communication, machine to machine (machine to machine, M2M) communication, machine type communication (machine type communication, MTC), and vehicle to everything (vehicle to everything, V2X) communication such as vehicle to vehicle (vehicle to vehicle, V2V) communication, vehicle to infrastructure (vehicle to infrastructure, V2I) communication, vehicle to pedestrian (vehicle to pedestrian, V2P) communication, and vehicle to network (vehicle to network, V2N) communication, long term evolution-vehicle (long term evolution-vehicle, LTE-V) communication, machine type communication (machine type communication, MTC), internet of things (Internet of Things, IoT) communication, industrial internet communication, and long term evolution-machine (long term evolution-machine, LTE-M) communication.

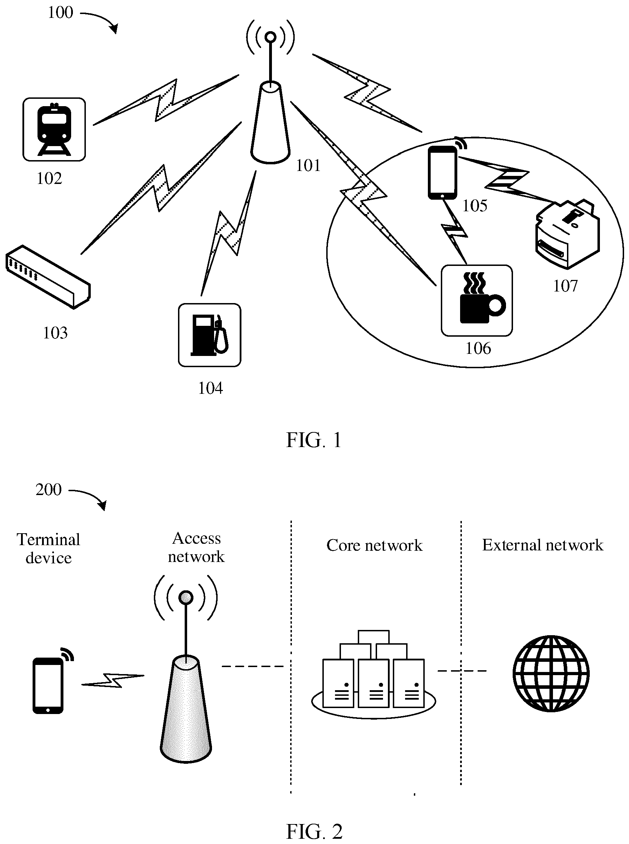

For ease of understanding of embodiments of this application, FIG. 1 is a schematic diagram of a communication system 100 to which a method according to an embodiment of this application is applicable. As shown in FIG. 1, the communication system may include at least one network device, for example, a network device 101. The communication system may further include at least one terminal device, for example, terminal devices 102 to 107. The terminal devices 102 to 107 may be mobile or fixed. The network device 101 may communicate with one or more of the terminal devices 102 to 107 through a radio link. In other words, the network device may send a signal to the terminal device, and the terminal device may also send a signal to the network device. For example, each network device may provide communication coverage for a specific geographical area, and may communicate with a terminal device in the coverage area. For example, the network device may send configuration information to the terminal device, and the terminal device may send uplink data to the network device based on the configuration information. For another example, the network device may send downlink data to the terminal device. Therefore, the network device 101 and the terminal devices 102 to 107 in FIG. 1 form a communication system.

Optionally, the terminal devices may also directly communicate with each other. For example, direct communication between the terminal devices may be implemented using a D2D technology or the like. As shown in FIG. 1, the terminal devices 105 and 106 may directly communicate with each other using the D2D technology, and the terminal devices 105 and 107 may directly communicate with each other using the D2D technology. The terminal device 106 and the terminal device 107 may communicate with the terminal device 105 separately or simultaneously.

The terminal devices 105 to 107 may alternatively communicate with the network device 101 separately. Direct communication with the network device 101 may be implemented. For example, the terminal devices 105 and 106 in the figure may directly communicate with the network device 101. Alternatively, indirect communication with the network device 101 may be implemented. For example, the terminal device 107 in the figure communicates with the network device 101 through the terminal device 105.

It should be understood that FIG. 1 shows one network device, a plurality of terminal devices, and communication links between the communication apparatuses. Optionally, the communication system 100 may include a plurality of network devices, and another quantity of terminal devices, for example, more or fewer terminal devices may be included in coverage of each network device. This is not limited in this application.

A plurality of antennas may be configured for the foregoing communication apparatuses, for example, the network device 101 and the terminal devices 102 to 107 in FIG. 1. The plurality of antennas may include at least one transmit antenna for sending a signal and at least one receive antenna for receiving a signal. In addition, each communication apparatus further additionally includes a transmitter chain and a receiver chain. A person of ordinary skill in the art may understand that the transmitter chain and the receiver chain each may include a plurality of components (for example, a processor, a modulator, a multiplexer, a demodulator, a demultiplexer, or an antenna) related to signal transmission and reception. Therefore, a network device and a terminal device may communicate with each other by using a multiple-antenna technology.

Optionally, the wireless communication system 100 may further include other network entities such as a network controller or a mobility management entity. No limitation is set thereto in this embodiment of this application.

It should be further understood that FIG. 1 is only a simplified schematic diagram of an example for ease of understanding. The communication system 100 may further include another network device or another terminal device, which is not shown in FIG. 1.

It should be noted that, based on the background of signal transmission, embodiments of this application are also applicable to a scenario of a homogeneous network and a heterogeneous network, a low frequency scenario (sub 6G), a high frequency scenario (above 6G), terahertz, optical communication, a frequency division duplex (frequency division duplex, FDD) system, a time division duplex (time division duplex, TDD) system, and a non-terrestrial network (non-terrestrial network, NTN), for example, satellite communication. In addition, a transmission point is not limited in this application, and transmission may be coordinated multipoint transmission between macro base stations, between micro base stations, or between a macro base station and a micro base station. In addition, embodiments of this application are applicable to communication between a base station and a terminal, communication between terminals, and communication between base stations, and are further applicable to a CU/DU architecture, a CP/UP separation architecture, and the like.

For ease of understanding of embodiments of this application, FIG. 2 is a schematic diagram of a network architecture 200 to which a method according to an embodiment of this application is applicable. As shown in FIG. 2, the network architecture 200 may include four parts: a terminal device, an access network device, a core network device, and an external network.

The following separately describes the four parts of the network architecture in detail.

### 1. Terminal device

The terminal device in the embodiments of this application may be referred to as user equipment (user equipment, UE), an access terminal, a subscriber unit, a subscriber station, a mobile station, a mobile console, a remote station, a remote terminal, a mobile device, a user terminal, a terminal, a wireless communication apparatus, a user agent or user apparatus, a soft terminal, or the like, and includes various handheld devices, vehicle-mounted devices, wearable devices, or computing devices that have a wireless communication function, or other processing devices connected to a wireless modem. The terminal may be a mobile station (mobile station, MS), a subscriber unit (subscriber unit), a cellular phone (cellular phone), a smartphone (smartphone), a wireless data card, a personal digital assistant (personal digital assistant, PDA) computer, a tablet computer, a wireless modem (modem), a handset (handset), a laptop computer (laptop computer), a machine type communication (machine type communication, MTC) terminal, or the like.

The terminal device in embodiments of this application may alternatively be a mobile phone (mobile phone), a computer with a wireless transceiver function, a virtual reality (virtual reality, VR) terminal device, an augmented reality (augmented reality, AR) terminal device, a wireless terminal in industrial control (industrial control), a wireless terminal in self-driving (self driving), a wireless terminal in remote medical (remote medical), a wireless terminal in smart grid (smart grid), a wireless terminal in transportation safety (transportation safety), a wireless terminal in a smart city (smart city), a wireless terminal in a smart home (smart home), a cordless phone, a session initiation protocol (session initiation protocol, SIP) phone, a wireless local loop (wireless local loop, WLL) station, a handheld terminal, a notebook computer, a cordless phone (cordless phone) or a wireless local loop (wireless local loop, WLL) station, a terminal device in a 5G network, a terminal device in a future evolved public land mobile network (public land mobile network, PLMN), or the like.

In addition, the terminal device may alternatively be a terminal device in the internet of things system. IoT is an important part in future development of information technologies. A main technical feature of IoT is to connect things to a network by using a communication technology, to implement an intelligent network for human-machine interconnection and thing-thing interconnection. It should be understood that a specific form of the terminal device is not limited in this application.

### 2. Access network device

The access network device may include an access network/radio access network (radio access network, RAN) device.

In embodiments of this application, the network device is an apparatus deployed in a radio access network to provide a wireless communication function for the terminal device. The device includes but is not limited to: a radio network controller (radio network controller, RNC), a base station controller (base station controller, BSC), a home base station (for example, a home evolved NodeB, or a home NodeB, HNB), a baseband unit (baseband unit, BBU), an access point (access point, AP) in a wireless fidelity system, a radio relay node, a radio backhaul node, a transmission point (transmission point, TP), or a transmission and reception point (transmission and reception point, TRP), may be a gNB (gNodeB, gNB) or a transmission point (a TRP or a TP) in a 5G (for example, NR) system, or one antenna panel or a group (including a plurality of antenna panels) of antenna panels of a base station in a 5G system, or may be a network node that forms a gNB or a transmission point, for example, a baseband unit BBU or a distributed unit (distributed unit, DU).

The network device in embodiments of this application may include a macro base station, a micro base station (also referred to as a small cell), a relay station, an access point, and the like in various forms, and may be a base transceiver station (base transceiver station, BTS) in a global system for mobile communications or a code division multiple access system, may be a NodeB (NodeB, NB) in a wideband code division multiple access system, or may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a wearable device, a vehicle-mounted device, a wearable device, a network device in a future 5G network, a network device in a future evolved public land mobile network (public land mobile network, PLMN), or the like.

The base station in embodiments of this application is a radio base station in a network, is also a network element in a radio access network, and is responsible for all functions related to an air interface. For example, a radio link maintenance function is for maintaining a radio link between the base station and a terminal, and is also responsible for protocol conversion of radio link data and IP data quality monitoring; a radio resource management function is for establishing and releasing a radio link, scheduling and allocating a radio resource, and the like; and a part of a mobility management function is for configuring a terminal to perform measurement, evaluating radio link quality of the terminal, determining inter-cell handover of the terminal, and the like.

In a network structure, the network device may include a central unit (centralized unit, CU) node, a distributed unit node, a RAN device including a CU node and a DU node, or a RAN device including a CU control plane node (CU-CP node), a CU user plane node (CU-UP node), and a DU node. The network device provides a service for a cell. The terminal device communicates with the cell by using a transmission resource (for example, a frequency domain resource) allocated by the network device. The cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

### 3. Core network device

It should be understood that, as a core part of a mobile communication network, a core network plays a role of connection, and is mainly responsible for processing mobility management, session management, and data transmission of a terminal user. Simply, the mobile network may be divided into three parts: a base station subsystem, a network subsystem, and a system support part. The core network is included in the network subsystem. A main function of the core network is to forward call requests or data requests from an air interface to different networks.

It should be understood that the core network provides a user connection, manages a user, and bears a service, and serves as a bearer network to provide an interface to an external network. Establishment of the user connection includes functions such as mobility management (mobile management, MM), call management (connection management, CM), switching/routing, and recording notification. The user management includes user description, quality of service (Quality of Service, QoS), user paging accounting (accounting), virtual home environment (virtual home environment, VHE), and security (corresponding security measures provided by an authentication center, including security management for a mobile service and security processing for external network access). The bearer access (access) includes a public switched telephone network (public switched telephone network, PSTN) to the outside, an external circuit data network and a packet data network, an internet (internet) and an intranet (intranet), a short message service (Short Message Service, SMS) server of the mobile network itself, and the like. The core network can also provide basic services including mobile office, e-commerce, paging, entertainment services, travel and location-based services, telemetry (telemetry), simple message transfer (monitoring and control), and the like.

By way of example rather than limitation, the core network device may include function units such as an access and mobility management function (access mobility function, AMF), a session management function (session management function, SMF), a policy control function (policy control function, PCF), and a user plane function (user plane function, UPF). These function units may work independently, or may be combined to implement some control functions. For example, the AMF, the SMF, and the PCF may be combined as a management device, to complete access control and mobility management functions such as access authentication, security encryption, and location registration of a terminal device, session management functions such as establishment, release, and change of a user plane transmission path, and functions of analyzing some slice (slice) related data (such as congestion) and terminal device related data. The UPF mainly completes functions such as routing and forwarding of user plane data, for example, is responsible for filtering packets of a terminal device, transmitting/forwarding data, controlling a rate, and generating charging information.

It should be noted that the 5G core network includes a service-based architecture, and supports network slicing and separation of a control plane and a user plane. For separation of network function, a network is constructed in a software-based, modular, and service-oriented manner. For separation of the control plane and the user plane, user plane functions are not restricted by "centralization", and can be flexibly deployed on both the core network and the access network.

### 4. External network

The external network may provide a service for a user. For example, the external network may be the internet (internet), a public switched telephone network (public switched telephone network, PSTN), or the like.

It should be understood that the communication system and the network architecture are merely examples for description, and are intended to describe the technical solutions in embodiments of this application more clearly, but do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems. For example, the communication system may further include a core network device. The core network device may be connected to a plurality of access network devices, and is configured to control the access network devices. In addition, data received from a network side (for example, the internet) may be distributed to the access network devices.

A specific structure of an execution body of a method provided in embodiments of this application is not particularly limited in embodiments of this application, provided that a program that records code for the method provided in embodiments of this application can be run to perform communication according to the method provided in embodiments of this application. For example, the execution body of the method provided in embodiments of this application may be a terminal device, a network device, a function module that can invoke and execute the program in the terminal device or the network device, or a component (for example, a chip or a circuit) that may be applied to the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry instructions and/or data.

For ease of description, the following first describes a mainstream service in embodiments of this application.

Enhanced mobile broadband (enhanced mobile broadband, eMBB): It is a further improvement of user experience based on an existing mobile broadband service scenario. It is also an application scenario that is most close to our daily life. The most intuitive experience brought by 5G is that a network speed is greatly improved. Even for 4K high-definition videos, a peak rate can reach 10 Gbps. For example, eMBB refers to large-traffic mobile broadband services such as 3D and ultra-high-definition videos.

Ultra-reliable and low-latency communication (ultra reliable and low latency communication, URLLC): It features high reliability, low latency, and high availability. The URLLC includes the following scenarios and applications: industrial application and control, traffic safety and control, remote manufacturing, remote training, remote surgery, and the like. URLLC has great potential in unmanned driving services. In addition, this is also very important for the security industry. URLLC refers to services that require low latency and high reliability, such as unmanned driving and industrial automation.

Narrow band internet of things (narrow band internet of things, NB-IoT): The NB-IoT features wide coverage, massive connections, a low rate, low costs, low power consumption, and an excellent architecture. For example, the NB-IoT features massive connections, lower power consumption, and lower chip costs. For example, NB-IoT is applied to smart water meters, smart parking, smart pet tracking, smart bicycles, smart smoke detectors, smart toilets, and smart vending machines.

Massive machine type communications (massive machine type communications, mMTC): It features low costs and enhanced coverage.

Customer premise equipment (customer premise equipment, CPE): It is a mobile signal access device that receives a mobile signal and forwards the signal as a wireless Wi-Fi signal. It is also a device that converts a high-speed 4G or 5G signal into a Wi-Fi signal. A large quantity of mobile terminals can access the internet at the same time. The CPE can be widely used in rural areas, towns, hospitals, organizations, factories, and residential communities to provide wireless network access, reducing costs of wired network deployment.

Vehicle to everything (V2X): It is a key technology of a future intelligent transportation system. It implements communication between a vehicle and a vehicle, between a vehicle and a base station, and between a base station and a base station. In this way, a series of traffic information such as a real-time road condition, road information, and pedestrian information can be obtained. This improves driving safety, reduces congestion, improves traffic efficiency, provides in-vehicle entertainment information, and the like.

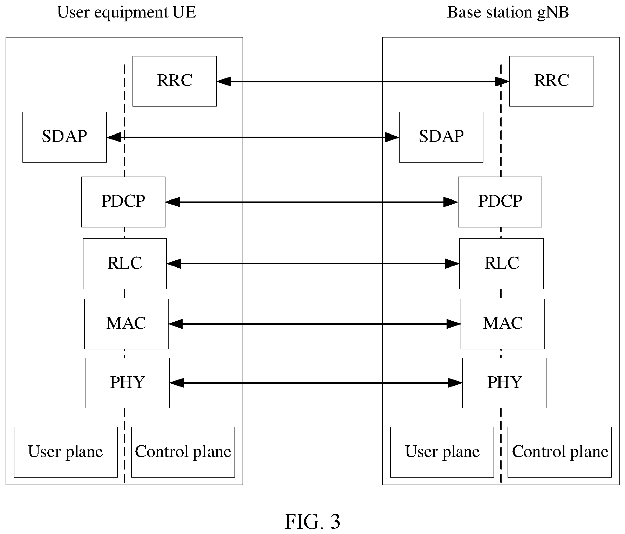

FIG. 3 is a schematic diagram of an example of a user plane protocol stack and a control plane protocol stack to which this application is applicable. As shown in FIG. 3, a terminal and a base station may include a user plane (user plane) protocol and a control plane (control plane) protocol. Layers of the terminal and the base station may be connected to each other to transmit information.

It should be understood that the user plane protocol stack includes a service data adaptation protocol (service data adaptation protocol, SDAP) layer, a packet data convergence protocol (packet data convergence protocol, PDCP) layer, a radio link control (radio link control, RLC) layer, a media access control (medium access control, MAC) layer, and a physical (physical, PHY) layer, and the control plane protocol stack includes a radio resource control (radio resource control, RRC) layer, a PDCP layer, an RLC layer, a MAC layer, and a PHY layer.

The SDAP layer is a protocol layer newly introduced in NR. The PDCP is for encryption, integrity protection, splitting, and the like. The RLC is for segmentation and retransmission. The MAC is for multiplexing, control, packet assembly, packet disassembly, and the like. Functions of these protocol layers may be implemented by one node, or may be implemented by a plurality of nodes. For example, in an evolved structure, a RAN device may include a central unit CU and a distributed unit DU, and the plurality of DUs may be controlled by one CU in a centralized manner.

The following uses uplink transmission as an example to describe sending and of each application layer (application layer, APP) packet (downlink transmission is performed on a base station gNB side).
(1) The APP layer on the UE side submits data to the SDAP layer. After processing the data, the SDAP layer of the UE delivers the data to the PDCP layer; and optionally, adds header overheads of an SDAP header to generate an SDAP protocol data unit (protocol data until, PDU), and delivers the SDAP PDU to the PDCP layer of the UE.
(2) The PDCP layer of the UE further uses the SDAP PDU as an RLC service data unit (service data unit, SDU); and optionally, adds header overheads of a PDCP header to generate a PDCP PDU, and delivers the PDCP PDU to the RLC layer of the UE.
(3) The RLC layer of the UE uses the PDCP PDU as an RLC SDU; and optionally, adds header overheads of an RLC header to generate an RLC PDU, and delivers the RLC PDU to the MAC layer of the UE.
(4) The MAC layer of the UE uses the RLC PDU as a MAC SDU, adds header overheads of a MAC subheader to generate a MAC subPDU, cascades a plurality of MAC subPDUs (if a plurality of APP packets need to be sent at the same time, MAC subPDUs corresponding to the plurality of MAC SDUs are generated; or if a MAC CE needs to be sent, MAC subPDUs corresponding to the MAC CE are generated) to generate a MAC PDU, and delivers the MAC PDU to the PHY layer of the UE.
(5) After receiving the MAC SDU, the PHY layer of the UE sends the MAC SDU to the base station on a corresponding physical uplink shared channel (physical uplink shared channel, PUSCH) time-frequency resource.

In other words, in transmission of an application layer packet, a protocol data unit PDU of a current layer is a service data unit SDU of a lower layer, and a service data unit SDU of the current layer is a protocol data unit PDU of an upper layer. The service data unit SDU corresponds to data that is not processed at a sublayer. For a sublayer, a service data unit SDU is input. The protocol data unit PDU corresponds to data that is processed by the sublayer to form data in a specific format. For a sublayer, a protocol data unit PDU is output.

It should be noted that data transmitted between N layers of users and N layers of protocols is referred to as a service data unit SDU. Data transmitted between N layers of protocol entities is referred to as a protocol data unit PDU. Through data sending/receiving management, an SDU submitted by a user is sent in a form of a PDU to a peer protocol entity through a lower-layer channel. The PDU is restored to the SDU at a receiver and the SDU is sent to a user at the receiver.

PDU encapsulation/decapsulation: At a transmitter, an SDU delivered by a user is encapsulated into a PDU by adding protocol control information (protocol control information, PCI). At a receiver, the received PDU is decapsulated, the PCI is removed to restore to the SDU, and the SDU is sent to a user at the receiver.

SDU segmentation/assembling: If bandwidth of a lower-layer channel cannot meet a requirement for transmitting an SDU, the SDU needs to be divided into a plurality of segments, which are separately encapsulated into PDUs for sending (in segments). At a receiver, the PDUs are decapsulated and then reassembled into the SDU.

SDU cascading/separation: The cascading means that a layer-(n) protocol entity at a transmitter encapsulates a plurality of SDUs (n) with a short length into one PDU (n) for sending, and a receiver decapsulates the received PDU (n) to separate the plurality of SDUs (n). A purpose of using a cascading function is to improve channel utilization.

PDU splitting/combination: The PDU splitting means that a layer-(n) protocol entity at a transmitter splits one PDU (n) into a plurality of SDUs (n-1), and sends the plurality of SDUs (n-1) in parallel through a plurality of channels (n-1). Then, a receiver combines the received plurality of SDUs (n-1) into one PDU (n). Because this is an N-layer function, the combination operation is performed at N layers, that is, the N layers first obtain a plurality of split PDUs (n), and then combines them into one PDU (n).

For ease of understanding of the technical solutions in this application, the following first describes background technologies related to this application.

Ultra-reliable and low latency communication URLLC is one of the three 5G application scenarios. As a breakthrough point for the mobile communication industry to enter vertical industries, URLLC is critical for wide application of autonomous driving, industrial manufacturing, internet of vehicles (IoV), and a smart grid, and is enhanced in 3GPP NR R16.

The URLLC scenario features low latency and high reliability. The URLLC scenario is widely used, and has different requirements on latency, reliability, and bandwidth in different scenarios. Specifically, the scenario includes at least "telemetering, telesignaling, and telecontrol" of a power automation scenario, an internet of vehicles scenario, and an industrial manufacturing scenario. In addition, requirements for low latency and high reliability in the industrial manufacturing scenario are the most challenging.

For example, in the industrial manufacturing scenario, a manufacturing device in a smart factory accesses an enterprise cloud or an onsite control system through 5G, to collect onsite environment data and production data, and analyze a production status in real time. In this way, an entire production line is unmanned and wireless. Intelligent industrial manufacturing has high requirements on technical performance, and high-end manufacturing has high requirements on a delay and stability of workshop equipment. Specifically, the smart factory industry proposes a very specific performance requirement. If there are no more than 50 users in a service area, in end-to-end latency of 1 ms, communication service availability (communication system available, CSA) of a packet whose size is 40 bytes needs to be between 99.9999% and 99.999999%.

It should be understood that this application is also applicable to another service scenario having an ultra-reliable and low latency communication URLLC requirement. Further, the ultra-reliable and low latency communication URLLC technology provided in this application is also applicable to another service that has no such high latency and reliability requirements, and can improve a throughput perceived by a user and user experience. The technical solutions provided in this application are not limited to being applied to URLLC UE and a base station. For ease of description, the URLLC UE and the base station are used as examples for description.

For a URLLC service, an application layer packet needs to be transmitted by using a plurality of protocol stacks. For transmission of each APP packet, a MAC subheader corresponding to a MAC SDU needs to be added at a MAC layer. Consequently, subheader overheads are excessively high, and processing latency may be increased. For example, for uplink transmission, packet encapsulation latency on the UE side and packet decapsulation latency on the base station side increase; for downlink transmission, packet encapsulation latency on the base station side and packet decapsulation latency on the UE side increase.

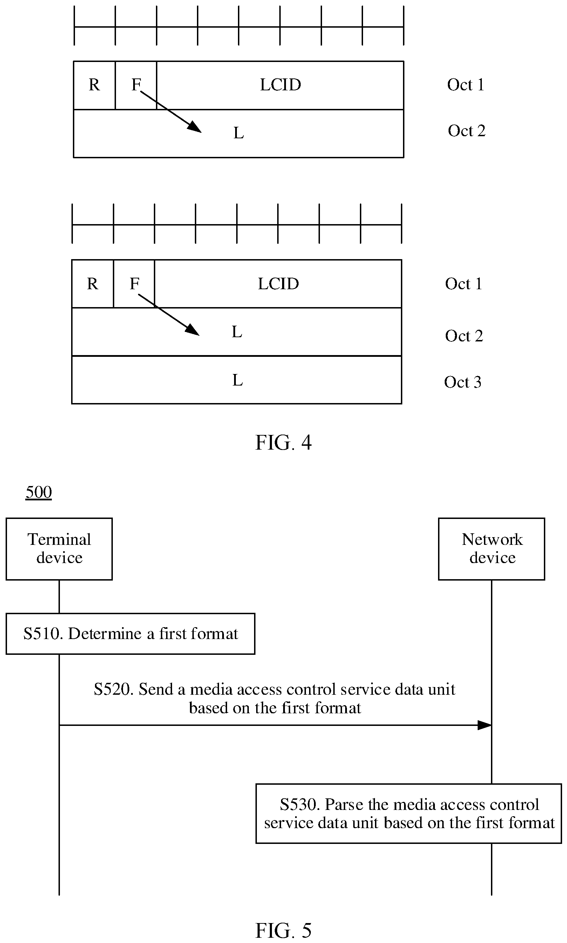

For example, FIG. 4 is a schematic diagram of an example of a media access control MAC subheader overhead to which this application is applicable. As shown in FIG. 4, from a perspective of a MAC layer, if same UE sends a plurality of small packets at the same time, each small packet forms a MAC SDU of the packet, and a corresponding MAC subPDU is generated after a corresponding MAC subheader is added. A MAC PDU has two formats (a DL MAC format and a UL MAC format). It can be learned that the MAC subheader corresponding to each APP small packet needs to occupy 2 to 3 bytes additionally, which increases air interface overheads.

The MAC subheader has two formats that occupy 2 bytes and 3 bytes respectively.

R is a reserved (reserved) bit that has a default value of 0.

F indicates a specific subheader format, that is, length L (1 byte or 2 bytes).

LCID is a logical channel identifier (logical channel identity, LCID) or a MAC control element (control element, CE) identifier.

L is a length value (unit: byte) of a non-fixed-length MAC CE or a length value of a MAC SDU.

It should be understood that one MAC PDU includes one MAC header (MAC header), zero or a plurality of MAC SDUs, zero or a plurality of MAC CEs, and possible padding information (padding). The MAC header includes one or more MAC subheaders. Each MAC subheader corresponds to one MAC PDU, one MAC CE, or padding.

In conclusion, in a current NR protocol stack, a MAC subheader corresponding to the MAC SDU needs to be added at the MAC layer for each APP packet, resulting in excessively high air interface overheads and possibly causing longer processing latency. Therefore, in the URLLC scenario, how to reduce subheader overheads of the MAC header is an urgent problem to be resolved.

Based on this, the technical solutions provided in this application mainly optimize the MAC layer, for example, reduce air interface overheads at the MAC layer, and do not involve optimization of another protocol layer (such as SDAP, PDCP, and RLC). This application provides a simplified MAC layer, including: A new MAC subheader format is defined, where no L field is carried; a new MAC subheader format is defined, where a plurality of MAC SDUs with a same LCID are cascaded, and the LCID may be explicitly carried or not explicitly carried; a new MAC subheader format is defined, where MAC SDU cascading is not supported, and no LCID field is carried; or a new MAC subheader format is defined, where a plurality of MAC SDUs with a same LCID and same L are cascaded, and L and the LCID may be explicitly carried or may not be explicitly carried, thereby reducing overheads. In the foregoing specific implementations, subheader overheads of the MAC subheader can be reduced in the URLLC scenario.

For ease of understanding of embodiments of this application, the following descriptions are provided.

In this application, "indicate" may include direct indication and indirect indication. When a piece of indication information is described as being used to indicate A, the indication information may directly indicate A or indirectly indicate A, but it does not necessarily indicate that the indication information carries A.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of the to-be-indicated information.

In the following embodiments, the first, the second, and various numeric number indications are for differentiation for ease of description, and are not intended to limit the scope of embodiments of this application. For example, the terms are used to differentiate between different indication information.

In the embodiments shown below, defining in a protocol may be implemented by prestoring corresponding code or a corresponding table in a device (for example, a terminal device and a network device), or in another manner that may indicate related information. A specific implementation of the "defining in a protocol" is not limited in this application. In embodiments of this application, "protocol" may be a standard protocol in the communication field, for example, may include an LTE protocol, an NR protocol, and a related protocol applied to a future communication system. This is not limited in this application.

"At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, and c may represent: a, b, or c, a and b, a and c, b and c, or a, b, and c, where a, b, and c each may be singular or plural.

The following describes in detail the communication method in embodiments of this application with reference to the accompanying drawings.

It should be understood that, in embodiments of this application, a transmitter and a receiver may be a network device or a terminal device. In other words, for uplink transmission, the transmitter may be a terminal device, and the receiver is a network device. Similarly, for downlink transmission, the transmitter may be a network device, and the receiver is a terminal device. Even the receiver and the transmitter may be both network devices or terminal devices. This is not specifically limited in this application. For ease of description, the following uses uplink transmission as an example to describe embodiments of this application. To be specific, the receiver is a base station, and the transmitter is UE. It should be understood that embodiments of this application are also applicable to downlink transmission.

FIG. 5 is a schematic diagram of an example of a simplified MAC layer to which an embodiment of this application is applicable. A specific implementation step 500 includes the following steps.

S510. A terminal device determines a first format.

The first format includes a logical channel identifier, the logical channel identifier corresponds to a length value of a media access control service data unit, and the first format is a subheader format of the media access control service data unit.

For example, the first format is a subheader format MAC subheader format of the MAC SDU.

S520. The terminal device sends the media access control service data unit to a network device based on the first format. Correspondingly, the network device receives the media access control service data unit from the terminal device.

For example, the terminal device sends first indication information to the network device. Correspondingly, the network device receives the first indication information from the terminal device. The first indication information indicates a service mode, and the length value of the media access control service data unit corresponding to the service mode is fixed.

In a possible implementation, before the terminal device sends the media access control service data unit, the network device determines first configuration information and sends the first configuration information to the terminal device, where the first configuration information indicates that the length value of the media access control service data unit corresponds to the logical channel identifier.

In another possible implementation, before the terminal device sends the media access control service data unit, the terminal device sends first information to the network device, where the first information indicates that the length value of the media access control service data unit corresponds to the logical channel identifier.

Optionally, a core network (core network, CN) may send the first information to the network device, to indicate that the service mode changes. Alternatively, the CN enables the network device to learn that data corresponding to an LCH ID of the terminal device is a periodic service (for example, the UE reports generation time of a packet, a periodicity of a service/packet, and a size/rate of the packet).

It should be noted that, when the length value of the media access control service data unit changes, the terminal device receives second configuration information from the network device, where the second configuration information indicates that an updated length value of the media access control service data unit corresponds to the logical channel identifier.

Further, the terminal device sends second information to the network device, where the second information indicates that the service mode changes, and the second information includes that the updated length value of the media access control service data unit corresponds to the logical channel identifier.

Optionally, the core network (core network, CN) may send the second information to the network device, to indicate that the service mode changes. Alternatively, the CN enables the network device to learn that data corresponding to an LCH ID of the terminal device is a periodic service (for example, the UE reports generation time of a packet, a periodicity of a service/packet, and a size/rate of the packet).

For example, the first format further includes a type and/or a quantity of cascaded media access control service data units. The terminal device sends N cascaded media access control service data units based on the first format, where the N cascaded media access control service data units correspond to the first format, and N is a positive integer greater than or equal to 1.

Optionally, the first format includes a type (B(O)). This type indicates whether the MAC subheader format is a new format or an old format, and may be indicated by adding 1 bit. For example, when 1-bit information is " 1", it may indicate that the first format is a newly defined format (B(O)/LCID, B(O)/LCID/N, or the like); or when 1-bit information is "0", it may indicate that the first format is an existing MAC subheader format in a protocol.

Optionally, the first format may not include a type B(O). For example, the MAC subheader format may be R/LCID. The first format is also a newly defined MAC subheader format, and does not support an old format defined in a current standard.

That is, if as defined in a standard, only one format is supported and the format is a new format, a field B does not need to be defined. On the contrary, if as defined in a standard, a plurality of formats are supported, a field B needs to be defined.

For example, the terminal device sends a media access control protocol data unit based on the first format and the N cascaded media access control service data units.

S530. The network device parses the media access control service data unit based on the first format.

In a possible implementation, the network device determines the first configuration information and/or the first indication information based on the logical channel identifier; determines the length value of the media access control service data unit based on the first configuration information and/or the first indication information; and parses the media access control service data unit based on the logical channel identifier and the length value of the media access control service data unit.

In another possible implementation, the first format further includes the type and/or the quantity of cascaded media access control service data units. Correspondingly, the network device determines, based on the type, that the subheader format of the media access control service data unit is the first format, and parses the media access control service data unit based on the logical channel identifier, the length value of the media access control service data unit, and the type and/or the quantity of cascaded media access control service data units.

It should be noted that, when parsing a packet, the network device usually first parses a MAC PDU to obtain a MAC subPDU, and then parses a MAC subheader and a MAC SDU/MAC CE. For a specific process of parsing the MAC PDU and the MAC CE, refer to a technical means in a current protocol. This is not specifically limited in this application.

In this embodiment of this application, a manner of carrying the indication information, the configuration information, and the like may be but is not limited to one or a combination of at least two of radio resource control signaling, media access control (media access control, MAC) layer signaling, and physical (physical, PHY) layer signaling. The radio resource control signaling includes radio resource control (radio resource control, RRC) signaling, the MAC layer signaling includes a MAC control element (control element, CE), and the physical layer signaling includes downlink control information (downlink control information, DCI), uplink control information (uplink control information, UCI), and the like.

Optionally, the manner of carrying the indication information, the configuration information, and the like may alternatively be but is not limited to non-access (non-access stratum, NAS) signaling, SDAP layer signaling, PDCP layer signaling, RLC layer signaling, and the like.

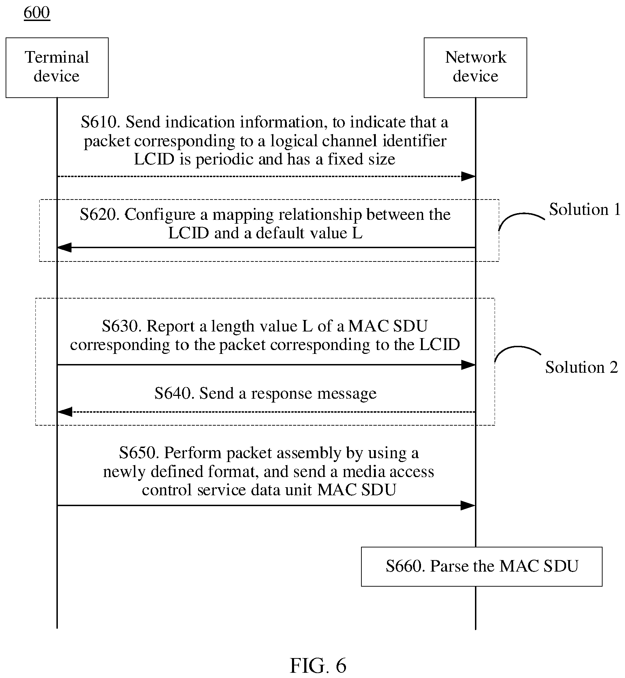

FIG. 6 is a schematic diagram of an example of a simplified MAC layer to which an embodiment of this application is applicable. A MAC subheader format is newly defined for a MAC SDU, and the format does not carry an L field, so that air interface overheads are reduced by reducing L. A specific implementation step 600 includes the following steps.

Currently, IIoT assumes that a packet is periodic and has a fixed size, and that there is strict transmission latency constraint (for example, 1 ms; otherwise, the packet is discarded). In this case, for some URLLC dedicated logical channels (logical channels, LCHs), it is assumed that there is only one MAC SDU of a fixed size each time (it is assumed that RLC segmentation is not allowed. Otherwise, one URLLC is transmitted for a plurality of times, and reliability is reduced).

S610. A terminal device (for example, UE) sends indication information to a network device (for example, a base station gNB). Correspondingly, the gNB receives the indication information from the UE.

The indication information indicates that a packet of a MAC SDU corresponding to a URLLC logical channel identifier (logical channel identity, LCID/LCH ID) is periodic and has a fixed size.

Optionally, the UE directly uses a service mode (traffic pattern) in UE assistance information (UE assistance information, UAI), to enable the base station to learn that data corresponding to the LCH ID of the UE is a periodic service. For example, the UE reports generation time of a packet, a periodicity of a service/packet, and a size/rate of the packet.

S620. (Solution 1) The gNB configures a mapping relationship between an LCID or an LCH ID and a default value L (that is, an example of first configuration information) for the UE.

For example, the gNB configures, for the UE, a size (default value) of a packet of a MAC SDU corresponding to an LCH ID (for example, URLLC LCH).

Optionally, the gNB may configure a mapping relationship between a data radio bearer identifier DRB id and the default value L for the UE.

S630. (Solution 2) The UE sends, to the gNB, a length value L (that is, an example of first information) of the MAC SDU corresponding to the packet corresponding to the LCH ID. Correspondingly, the gNB receives the length value L of the MAC SDU corresponding to the packet corresponding to the LCH ID from the UE.

It should be understood that the UE may recommend/configure/notify/request, for the base station, that a packet size corresponding to the LCH ID is always fixed and/or a packet size (for example, the size is X bytes).

S640. For the message sent by the UE in step S630, the base station may return a success/failure to the UE.

S650. The UE performs packet assembly for a MAC subheader by using a newly defined format (that is, an example of a first format), and sends, to the gNB, the MAC SDU corresponding to the LCH ID. Correspondingly, the gNB receives the MAC SDU from the UE.

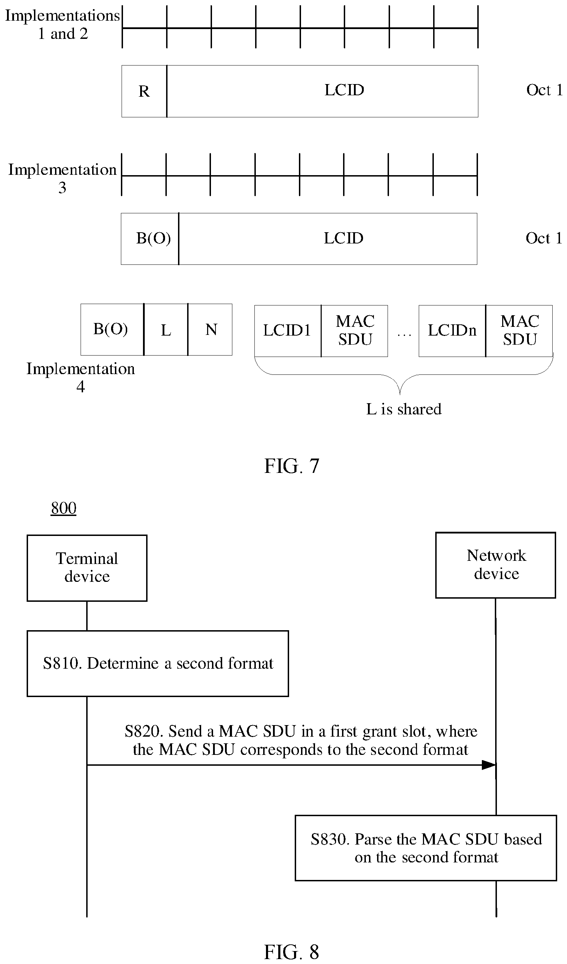

FIG. 7 is a schematic diagram of an example of a media access control MAC subheader overhead to which this application is applicable. As shown in FIG. 7, in an implementation 1 and an implementation 2, a MAC subheader format is newly defined, and the format does not carry L and occupies only one byte. In the implementations 1 and 2, the LCID/LCH ID can be for sending only a MAC SDU of a fixed size, that is, the LCID uniquely corresponds to L. Therefore, the base station preconfigures the mapping relationship between the LCID and L, or the UE reports L corresponding to the LCID, so that during packet transmission, the MAC subheader format does not carry L, thereby reducing subheader overheads corresponding to the MAC SDU, and reducing air interface overheads and processing latency. In an implementation 3, a "B" bit is for replacing an "R" bit in the current MAC subheader, to indicate the newly defined new MAC subheader. Compared with the implementation 1 and the implementation 2, the implementation 3 is more flexible, and a MAC SDU of a fixed size and a MAC SDU of a non-fixed size may be transmitted. In an implementation 4, a two-level MAC subheader format is used. A first-level MAC subheader is still B(O)/L/N, and a second-level MAC subheader format is LCID, where a plurality of cascaded MAC SDUs share same L.

Optionally, in the implementation 1 and the implementation 2, a length value L of each MAC SDU may be placed in the first-level MAC subheader, and a format of the subheader is (R/LCID/L1/L2/.../Ln). L1, L2, ..., and Ln are data lengths of the 1^{st} MAC SDU, the 2^{nd} MAC SDU, and the n^{th} MAC SDU respectively.

It should be understood that, in this implementation, the newly defined MAC subheader format may include B, or may not include B. That is, if as defined in a standard, only one format is supported and the format is a new format, a field B does not need to be defined. On the contrary, if as defined in a standard, a plurality of formats are supported, a field B needs to be defined. The implementation 1, the implementation 2, and the implementation 3 may be cascaded or may not be cascaded. The newly defined subheader format corresponding to the MAC SDU may be a one-level MAC subheader format, or may be a two-level MAC subheader format. A second-level MAC subheader format may be combined into a first-level MAC subheader. This is not specifically limited in this application.

For example, for the implementation 1 and the implementation 2, the MAC subheader subheader overhead of the MAC SDU uses a newly defined format, that is, the MAC subheader is (R/LCID), which does not include L.

For example, for the implementation 3,the MAC subheader subheader overhead of the MAC SDU uses a newly defined format, that is, the MAC subheader is (B(O)/LCID), which does not include L.

For example, for the implementation 4,the MAC subheader subheader overhead of the MAC SDU uses a newly defined format, that is, a first-level MAC subheader is (B(O)/L/N), which does not include an LCID. The N MAC SDUs are cascaded to share same L. The second-level MAC subheader is (LCID/MAC SDU), where LCIDs in second-level subheaders corresponding to different MAC SDUs may be the same or different.

That is, if as defined in a standard, only one format is supported and the format is a new format, a field B does not need to be defined. On the contrary, if as defined in a standard, a plurality of formats are supported, a field B needs to be defined.

S660. The gNB parses the MAC SDU.

For example, for the implementations 1 and 2, the gNB may determine the length value L of the MAC SDU based on the MAC subheader (R/LCID) and the correspondence that is between the LCID and L and that is preconfigured in step S620, or determine the default value L based on L corresponding to the LCID/LCH ID reported by the UE in step S630, and parse the corresponding MAC SDU.

For example, for the implementation 3, the gNB may indicate, based on the MAC subheader (B(O)/LCID) and "B", that a format corresponding to the MAC SDU is a new MAC subheader. After receiving the MAC subheader in the format, the base station determines the length value L of the MAC SDU based on the mapping relationship that is between the LCID/LCH ID and default L and that is preconfigured by the base station for the UE in step S6210, and then parses the corresponding MAC SDU.

For example, for the implementation 4, the gNB may indicate, based on the first-level MAC subheader (B(O)/L/N) and "B", that the format corresponding to the MAC SDU is a new MAC subheader, and determine a quantity of cascaded MAC SDUs based on "N", where L indicates that the N MAC SDUs share L. The gNB may parse, based on a second-level MAC subheader (LCID/MAC SDU), a MAC SDU corresponding to each LCID after receiving the MAC subheader in the format. It should be understood that in this implementation, both L and the LCID of the MAC SDU are explicitly carried in the MAC subheader. Therefore, the MAC SDU may be parsed without depending on the mapping relationship that is between the LCID and L and that is preconfigured by the base station for the UE.

That is, if as defined in a standard, only one format is supported and the format is a new format, a field B does not need to be defined. On the contrary, if as defined in a standard, a plurality of formats are supported, a field B needs to be defined.

It should be noted that, after the packet size (packet size) corresponding to the LCH ID of the UE changes, the UE may report an updated traffic pattern by using the foregoing step S610 again, so that the base station learns of updated data corresponding to the LCH ID of the UE, for example, generation time of a packet, a periodicity of a service/packet, and a size/rate of the packet. Then, the base station may reconfigure a mapping relationship between an LCH and the packet size for the UE based on a traffic pattern report/update message, that is, step S620 (that is, an example of second configuration information). Similarly, after the packet size (packet size) corresponding to the LCH ID of the UE changes, the UE may report, to the base station, the length value L (that is, an example of second information) of the MAC SDU corresponding to the packet corresponding to the updated LCH ID.

It should be understood that, in the foregoing implementation 1 and implementation 2, it is assumed that the LCH can be for sending only the MAC SDU of the fixed size. Herein, the LCID is uniquely bound to L. Therefore, L is reduced by using the newly defined MAC subheader format, to reduce air interface overheads.

As an example rather than a limitation, the method 600 further provides another implementation 3. To be specific, it is assumed that the LCH may be for sending a MAC SDU of a fixed size and a MAC SDU of a non-fixed size. Herein, the LCID is not uniquely bound to L. In the implementation 3, in step S650, an additional 1 bit needs to be added to indicate that a MAC SDU subheader is in a newly defined MAC subheader format. For example, a reserved "R" bit in the current MAC subheader may be for indication. That is, a new format corresponding to a MAC subheader corresponding to each MAC SDU is (B(O)/LCID), where L is not carried.

For example, if the "B" bit is "1", it indicates that a MAC subheader corresponding to a MAC SDU received by the base station is in a new format, and the format may not carry L. In this case, the LCH may be for sending a MAC SDU of a fixed size corresponding to default L, where default L may be determined based on the mapping relationship that is between the LCID and L and that is preconfigured by the base station for the UE. If the "B" bit is "0", it indicates that the MAC subheader corresponding to the MAC SDU received by the base station is in an old format. The format may carry L. In this case, the LCH may be for sending a MAC SDU of a non-fixed size corresponding to non-default L.

That is, if as defined in a standard, only one format is supported and the format is a new format, a field B does not need to be defined. On the contrary, if as defined in a standard, a plurality of formats are supported, a field B needs to be defined.

Optionally, corresponding to step S660, after receiving the MAC subheader in the new format, the base station may parse the MAC SDU based on the default value L that corresponds to the LCID/LCH ID and that is preconfigured by the base station for the UE in step S620. For example, MAC SDUs with same L may be cascaded (LCIDs may be the same or different), and share a newly designed MAC subheader (B(O)/LCID).

It should be noted that, when parsing a packet, the network device usually first parses a MAC PDU to obtain a MAC subPDU, and then parses a MAC subheader and a MAC SDU/MAC CE. For a specific process of parsing the MAC PDU and the MAC CE, refer to a technical means in a current protocol. This is not specifically limited in this application.

Uplink UL transmission is used as an example to describe how the UE determines a MAC subheader format to be used to send the MAC SDU (DL transmission and implementation for a gNB are not discussed).

For the implementation 1 and the implementation 2: A standard supports only the new format, and does not support the old format. Therefore, a transmitter and a receiver can select only the new format without additional judgment.

For the implementation 3: If a length L of the MAC SDU to be sent is the same as default L corresponding to the LCID of the MAC SDU, the new format is used; otherwise, the old format originally defined in the standard is used.

For the implementation 4: In one transport block (transport block, TB) transmission, if a quantity of MAC SDUs that can be cascaded (that is, MAC SDUs with same L) is greater than M, or is greater than or equal to M (M is preconfigured by the base station for the UE), this format is used (if the format is defined in the standard); otherwise, the implementation 4 is not used (the implementation 1, 2, or 3, or an old format defined in a standard may be used).

In conclusion, the method 600 provides three possible implementations. In a scenario in which a plurality of MAC SDUs have same L, a new MAC subheader format (B(O)/LCID) corresponding to the MAC SDU is designed, where L is not carried. That is, MAC SDUs with same L are cascaded (LCIDs may be the same or different), and share a newly designed MAC subheader (B(O)/LCID), thereby reducing air interface overheads caused by L.

FIG. 8 is another schematic diagram of a simplified MAC layer to which an embodiment of this application is applicable. A new MAC subheader format is defined, where a plurality of MAC SDUs with a same LCID are cascaded, and the LCID may be explicitly carried or not explicitly carried; or a new MAC subheader format is defined, where MAC SDU cascading is not supported, and no LCID field is carried, thereby reducing air interface overheads by reducing LCIDs. As shown in FIG. 8, a specific implementation step 800 includes the following steps.

S810. A terminal device determines a second format.

The second format includes a length value of a media access control service data unit, and the second format is a subheader format corresponding to the media access control service data unit.

S820. The terminal device performs packet assembly for a MAC subheader by using a newly defined format, and sends a MAC SDU to a base station in a first slot. Correspondingly, the base station receives the MAC SDU from the terminal device in the first slot.

The first slot is a grant slot, and the slot is in a one-to-one correspondence with a logical channel identifier.

For example, the terminal device sends second indication information to a network device, where the second indication information indicates that a first grant slot is in a one-to-one correspondence with the logical channel identifier.

Specifically, MAC SDUs with a same LCID are cascaded, and share a newly designed first-level MAC subheader (B(O)/LCID/N), and a second-level MAC subheader includes a length value L corresponding to a MAC SDU (L of cascaded MAC SDUs may be the same or different).

For example, a MAC subheader subheader overhead of the MAC SDU uses a newly defined format, that is, the MAC subheader is (B(O)/LCID/N).

Optionally, if the length value L of each MAC SDU is placed in the first-level MAC subheader, a format of the subheader is (B(O)/LCID/N/L1/L2/.../Ln). L1, L2, ..., and Ln are data lengths of the 1^{st} MAC SDU, the 2^{nd} MAC SDU, and the n^{th} MAC SDU respectively.

Specifically, MAC SDUs with a same LCID are cascaded, and share a newly designed first-level MAC subheader (B(O)/N), and a second-level MAC subheader includes a length value L (L may be the same or different) corresponding to a MAC SDU.

For example, a MAC subheader subheader overhead of the MAC SDU uses a newly defined format, that is, the MAC subheader is (B(O)/N), which does not include an LCID.

Optionally, if the length value L of each MAC SDU is placed in the first-level MAC subheader, a format of the subheader is (B(O)/N/L1/L2/.../Ln).

Specifically, the MAC SDUs do not support cascading, and a new subheader format (B(O)/L) corresponding to each MAC SDU does not carry an LCID.

For example, a MAC subheader subheader overhead of the MAC SDU uses a newly defined format, that is, the MAC subheader is (B(O)/N), which does not include an LCID or L.

In conclusion, if as defined in a standard, only one format is supported and the format is a new format, a field B does not need to be defined. On the contrary, if as defined in a standard, a plurality of formats are supported, a field B needs to be defined.

S830. The base station parses the MAC SDU based on the newly defined format (that is, an example of the second format).

In a possible implementation, a grant-free (grant free, GF) resource is bound to an LCH ID. A specific grant slot can be for transmitting data only on a specific LCH. That is, the first slot is only for sending the MAC SDU corresponding to the LCID or the LCH ID. When the MAC subheader reported by the UE carries only L and does not carry the LCID, the base station may determine a corresponding LCID or LCH ID based on the receiving grant slot.

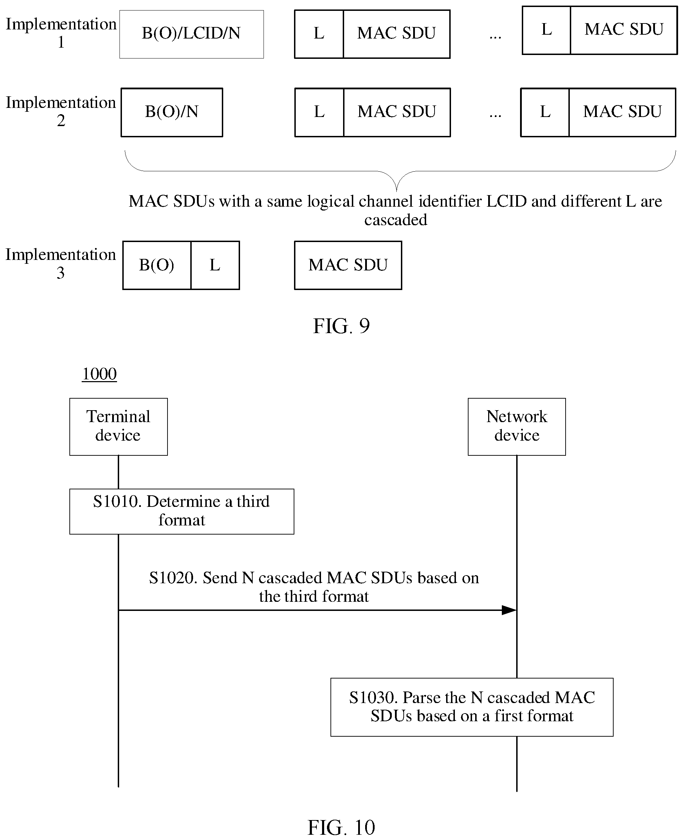

FIG. 9 is a schematic diagram of another example of a media access control MAC subheader overhead to which this application is applicable. As shown in FIG. 9, in an implementation 1 and an implementation 2, a plurality of MAC SDUs are supported in cascading, and have a common LCID. In the implementation 1, the LCID is explicitly carried in a MAC subheader format. In the implementation 2, a MAC subheader format does not explicitly carry the LCID. In an implementation 3, cascading of a plurality of MAC SDUs is not supported, and a MAC subheader does not carry an LCID.

For ease of understanding this embodiment, the following describes parameters shown in FIG. 9.

B indicates a newly defined subheader format.

LCID is a logical channel identifier LCID for data corresponding to a MAC SDU, for example, an LCH ID.

N indicates a quantity of cascaded MAC SDUs.

L indicates a data length (for example, X bytes) of each of cascaded MAC SDUs.

MAC SDU indicates RLC PDU content, that is, a packet that needs to be transmitted at a MAC layer.

Implementation 1: MAC SDUs support cascading, that is, one LCID may correspond to a plurality of MAC SDUs and L thereof.

For example, a new two-level subheader format is designed. A first level is a subheader (B(O)/LCID/N) shared by a plurality of cascaded MAC SDUs, the plurality of MAC SDUs form one MAC subPDU, and each MAC SDU has a corresponding second-level subheader (for example, L).

Optionally, there may be only one level of subheader, and second-level subheaders corresponding to all MAC SDUs are placed in a first-level subheader. In this case, a format of the subheader is (B(O)/LCID/N/L1/L2/.../Ln). L1, L2, ..., and Ln are data lengths of the 1^{st}MAC SDU, the 2^{nd} MAC SDU, and the n^{th} MAC SDU respectively.

Optionally, L1, L2, ..., and Ln may not be completely carried. Because only data of the first and/or the last MAC SDU may be incomplete, and all intermediate MAC SDUs are complete and not truncated, lengths L corresponding to these MAC SDUs may not be carried.

Implementation 2: MAC SDUs support cascading and does not carry an LCID.

For example, the base station may learn of a corresponding LCID or LCH ID based on a binding relationship that is between a grant (grant) slot and an LCID or an LCH ID and that is originally configured by the base station for the UE. For example, if a grant-free (grant free, GF) resource or a dynamic grant DG resource is bound to an LCH ID, a grant slot can be for transmitting data only on an LCH. A new two-level subheader format is designed. A first level is a subheader (B(O)/N) shared by a plurality of cascaded MAC SDUs, and does not include an LCID. A plurality of MAC SDUs form one MAC subPDU, and each MAC SDU has a corresponding second-level subheader (for example, L).

Optionally, similar to the implementation 1, there may be only one level of subheader, and second-level subheaders corresponding to all MAC SDUs are placed in a first-level subheader. In this case, a format of the subheader is (B(O)/N/L1/L2/.../Ln).

Optionally, L1, L2, ..., and Ln may not be completely carried. Because only data of the first and/or the last MAC SDU may be incomplete, and all intermediate MAC SDUs are complete and not truncated, lengths L corresponding to these MAC SDUs may not be carried.

Implementation 3: MAC SDUs do not support cascading or carry an LCID.

For example, the base station may learn of a corresponding LCID or LCH ID based on a grant (grant) slot. For example, if a grant-free (grant free, GF) resource is bound to the LCH ID, a grant slot can be for transmitting data only on an LCH. Because this manner does not support MAC SDU cascading, one MAC subheader corresponds to one MAC SDU.

For example, a new subheader format is designed: A first level is a MAC SDU subheader, and includes only (B(O)/L), but does not include an LCID.

It should be understood that, in this implementation, the newly defined MAC subheader format may include B, or may not include B. That is, for the foregoing three possible implementations, if as defined in a standard, only one format is supported and the format is a new format, a field B does not need to be defined. On the contrary, if as defined in a standard, a plurality of formats are supported, a field B needs to be defined. In this implementation, cascading may be performed, or cascading may not be performed. The newly defined subheader format corresponding to the MAC SDU may be a one-level MAC subheader format, or may be a two-level MAC subheader format. A second-level MAC subheader format may be combined into a first-level MAC subheader. This is not specifically limited in this application.

For example, the gNB may parse the corresponding MAC SDU based on the MAC subheader (B(O)/LCID/N) or (B(O)/LCID/N/L1/L2/.../Ln).

For example, the gNB may determine a corresponding LCID based on the grant slot and the MAC subheader (B(O)/N) or (B(O)/N/L1/L2/.../Ln), and parse a corresponding MAC SDU.

For example, the gNB may determine a corresponding LCID based on the MAC subheader (B(O)/L) and the grant slot in step S820, and parse the corresponding MAC SDU.

In conclusion, if as defined in a standard, only one format is supported and the format is a new format, a field B does not need to be defined. On the contrary, if as defined in a standard, a plurality of formats are supported, a field B needs to be defined.

It should be noted that, when parsing a packet, the network device usually first parses a MAC PDU to obtain a MAC subPDU, and then parses a MAC subheader and a MAC SDU/MAC CE. For a specific process of parsing the MAC PDU and the MAC CE, refer to a technical means in a current protocol. This is not specifically limited in this application.

Uplink UL transmission is used as an example to describe how the UE determines a MAC subheader format to be used to send the MAC SDU (DL transmission and implementation for a gNB are not discussed).

For the implementation 1: In one transport block (transport block, TB) transmission, if a quantity of MAC SDUs that can be cascaded (that is, MAC SDUs with same LCID) is greater than M, or is greater than or equal to M (M is preconfigured by the base station for the UE), the new format is used (if the format is defined in the standard).

For the implementation 2: In one time of transport block TB transmission, if a quantity of MAC SDUs that can be cascaded is greater than M, or is greater than or equal to M (M is preconfigured by the base station for the UE), and an LCID corresponding to the grant slot is the same as the LCID of the to-be-transmitted MAC SDU, the new format is used (if the format is defined in the standard).

For the implementation 3: If an LCID corresponding to the grant slot is the same as the LCID of the to-be-transmitted MAC SDU, the new format is used (if the format is defined in the standard).

In conclusion, the method 800 provides three possible implementations. In a scenario in which a plurality of MAC SDUs have a same LCID, a new MAC subheader format is (B(O)/LCID/N or B(O)/N) after MAC SDUs (L may be the same or different) are designed to be cascaded; or the MAC SDUs do not support cascading, a new MAC subheader format corresponding to each MAC SDU is (B(O)/L), and only L is carried, but no LCID is carried. In this way, air interface overheads caused by the LCID are reduced.

FIG. 10 is still another schematic diagram of a simplified MAC layer to which an embodiment of this application is applicable. A new MAC subheader format is defined, where a plurality of MAC SDUs with a same LCID and same L are cascaded, where L and the LCID may be explicitly carried or not explicitly carried, thereby reducing overheads. A specific implementation step 1000 includes the following steps.

S1010. A terminal device determines a third format.

The third format includes a quantity of cascaded media access control service data units, the third format corresponds to N cascaded media access control service data units, and N is a positive integer greater than or equal to 1.

In a possible implementation, the terminal device (for example, UE) sends indication information to a network device (for example, a base station gNB). Correspondingly, the gNB receives the indication information from the UE.

The indication information indicates that a packet of a MAC SDU corresponding to a URLLC logical channel identifier LCID/LCH ID has a fixed size.

Optionally, the UE directly uses a service mode (traffic pattern) in UE assistance information UAI, to enable the base station to learn that data corresponding to the LCH ID of the UE is a periodic service. For example, the UE reports generation time of a packet, a periodicity of a service/packet, and a size/rate of the packet.

In a possible implementation, the gNB configures a correspondence between an LCID and L for the UE.

For example, the gNB configures, for the UE, a size of a packet of a MAC SDU corresponding to an LCH ID (for example, URLLC LCH).

Optionally, the UE sends, to the gNB, a length value L of the MAC SDU corresponding to the packet corresponding to the LCH ID. Correspondingly, the gNB receives the length value L of the MAC SDU corresponding to the packet corresponding to the LCH ID from the UE.

It should be understood that the UE may recommend/configure/notify/request, for the base station, that a packet size corresponding to the LCH ID is always fixed and/or a packet size (for example, the size is X bytes).

S 1020. The terminal device performs packet assembly for a MAC subheader by using a newly defined format, and sends, to the base station, N cascaded MAC SDUs corresponding to the LCH ID. Correspondingly, the base station receives the N cascaded MAC SDUs from the terminal device, where N is a positive integer.

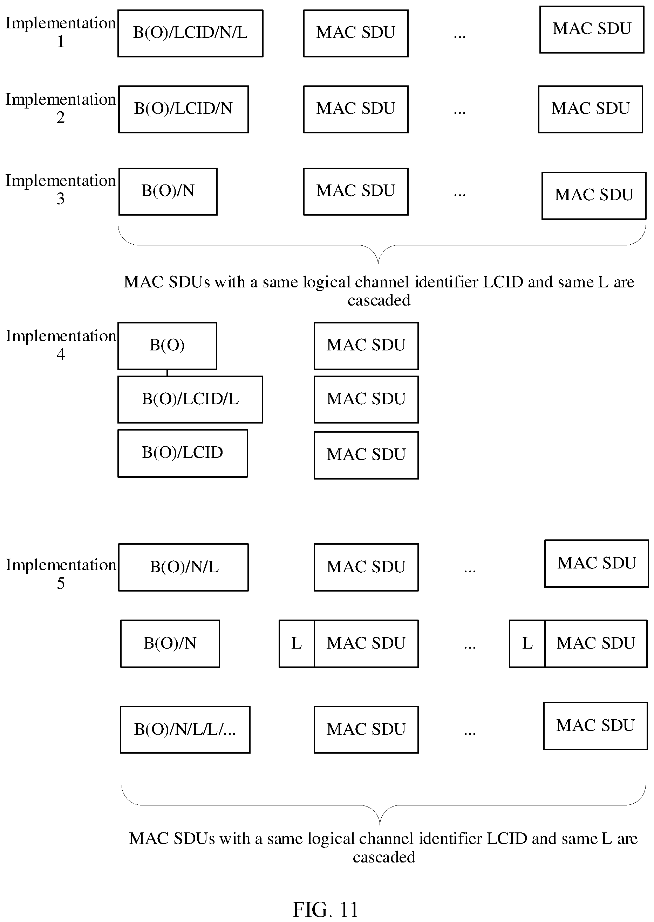

FIG. 11 is a schematic diagram of still another example of a media access control MAC subheader overhead to which this application is applicable. As shown in FIG. 11, a plurality of MAC SDUs with a same LCID and same L are cascaded together, and the following new format is used:

Implementation 1: A new subheader (B(O)/LCID/N/L) is used.

L and the LCID are explicitly carried.

B(O) indicates a new format (with cascading)/an old format (without cascading). For example, "1" indicates the new format (cascaded), and "0" indicates the old format (without cascading). If as defined in a standard, only one format is supported and the format is a new format, a field B does not need to be defined. On the contrary, if as defined in a standard, a plurality of formats are supported, a field B needs to be defined.

LCID is a logical channel identifier LCID for data corresponding to a MAC SDU, for example, an LCH Id.

N indicates a quantity of cascaded MAC SDUs.

L indicates a data length (for example, X bytes) of each of cascaded MAC SDUs.

MAC SDU indicates RLC PDU content, that is, a packet that needs to be transmitted at a MAC layer.

Implementation 2: A new subheader (B(O)/LCID/N) is used.

L is not explicitly carried, and LCID is explicitly carried. L is determined by using the mapping relationship that is between the LCID and L and that is preconfigured by the base station for the UE.

Implementation 3: A new subheader (B(O)/N) is used.

The LCID and L are not explicitly carried, and the base station may calculate the LCID based on a correspondence between an uplink subframe slot and an LCID. For example, assuming that a grant-free (grant free, GF) resource is bound to an LCH ID, a specific grant slot can be for transmitting data only on a specific LCH.

Implementation 4: A new subheader (cascading is not supported) is used.

That is, for the foregoing implementation 1, implementation 2, and implementation 3, a non-cascading manner is used, that is, the MAC subheader does not carry an N field. For example, the MAC subheader in the implementation 1 is (B(O)/LCID/L), the MAC subheader in the implementation 2 is (B(O)/LCID), and the MAC subheader in the implementation 3 is (B(O)).

Manner 5: Anew subheader (B(O)/N/L, B(O)/N, or B(O)/N/L/L...) is used.

The LCID is not carried, and L may be explicitly carried or may not be explicitly carried. L is determined by using the mapping relationship that is between the LCID and L and that is preconfigured by the base station for the UE. For example, there is only a first-level MAC subheader format, and a corresponding subheader format is B(O)/N/L or B(O)/N/L/L...; or the first-level MAC subheader format is B(O)/N, and a second-level MAC subheader format carries L, that is, the L field is carried in each MAC SDU.

In conclusion, for the foregoing several possible implementations, if as defined in a standard, only one format is supported and the format is a new format, a field B does not need to be defined. On the contrary, if as defined in a standard, a plurality of formats are supported, a field B needs to be defined.

It should be understood that, in this implementation, the newly defined MAC subheader format may include B, or may not include B. Similarly, in this implementation, cascading may be performed, or cascading may not be performed. The newly defined subheader format corresponding to the MAC SDU may be a one-level MAC subheader format, or may be a two-level MAC subheader format. A second-level MAC subheader format may be combined into a first-level MAC subheader. This is not specifically limited in this application.

For example, a MAC subheader subheader overhead of the MAC SDU uses a newly defined format, that is, the MAC subheader is (B(O)/LCID/N/L).

For example, a MAC subheader subheader overhead of the MAC SDU uses a newly defined format, that is, the MAC subheader is (B(O)/LCID/N), which does not include L.

For example, a MAC subheader subheader overhead of the MAC SDU uses a newly defined format, that is, the MAC subheader is (B(O)/N), which does not include an LCID or L.

For example, a MAC subheader subheader overhead of the MAC SDU uses a newly defined format, that is, the MAC subheader is (B(O)), which does not include the LCID, L, or N, that is, the MAC subheader format does not support cascading.

For example, a MAC subheader subheader overhead of the MAC SDU uses a newly defined format, that is, the MAC subheader is (B(O)/N/L or B(O)/N), which does not carry the LCID. L may be carried or may not be carried.

In conclusion, if as defined in a standard, only one format is supported and the format is a new format, a field B does not need to be defined. On the contrary, if as defined in a standard, a plurality of formats are supported, a field B needs to be defined.

S1030. The network device parses the N cascaded MAC SDUs based on the third format.

For example, the gNB may parse the corresponding MAC SDU based on the MAC subheader (B(O)/LCID/N/L).

For example, the gNB may determine the length value L of the MAC SDU based on the MAC subheader (B(O)/LCID/N) and the correspondence that is between the LCID and Land that is preconfigured in step S1020, and parse the corresponding MAC SDU.

For example, the gNB may determine an LCID (for example, a mapping relationship between a GF and an LCID) based on the MAC subheader (B(O)/N) and the correspondence between the uplink subframe slot and the LCID, and determine the length value L of the MAC SDU based on the correspondence that is between the LCID and L and that is preconfigured in step S1020, to parse the corresponding MAC SDU.

For example, the gNB may indicate, based on the MAC subheader (B(O)), that the MAC subheader does not support cascading, and supports a new format, but does not support an old format. For example, the gNB determines an LCID (for example, a mapping relationship between a GF and an LCID) and the correspondence between the uplink subframe slot and the LCID, and determines the length value L of the MAC SDU based on the correspondence that is between the LCID and L and that is preconfigured in step S1020, to parse the corresponding MAC SDU.

For example, the gNB may determine an LCID (for example, a mapping relationship between a GF/CG or DG and an LCID) based on the MAC subheader (B(O)/N/L or B(O)/N) and the correspondence between the uplink subframe slot and the LCID, and determine the length value L of the MAC SDU based on L carried in the MAC subheader format or the correspondence that is between the LCID and L and that is preconfigured in step S1020, to parse the corresponding MAC SDU.

It should be understood that, in this implementation, the newly defined MAC subheader format may include B, or may not include B. That is, if as defined in a standard, only one format is supported and the format is a new format, a field B does not need to be defined. On the contrary, if as defined in a standard, a plurality of formats are supported, a field B needs to be defined. In this implementation, cascading may be performed, or cascading may not be performed. The newly defined subheader format corresponding to the MAC SDU may be a one-level MAC subheader format, or may be a two-level MAC subheader format. The second-level MAC subheader format may be combined into the first-level MAC subheader. This is not specifically limited in this application.

It should be noted that, when parsing a packet, the network device usually first parses a MAC PDU to obtain a MAC subPDU, and then parses a MAC subheader and a MAC SDU/MAC CE. For a specific process of parsing the MAC PDU and the MAC CE, refer to a technical means in a current protocol. This is not specifically limited in this application.

Uplink UL transmission is used as an example to describe how the UE determines a MAC subheader format to be used to send the MAC SDU (DL transmission and implementation for a gNB are not discussed).

For the implementation 1: In one time of transport block TB transmission, if a quantity of MAC SDUs that can be cascaded (that is, having a same LCID and same L) is greater than M, or is greater than or equal to M (M is preconfigured by the base station for the UE), the new format is used (if the format is defined in the standard).

For the implementation 2: Same as the implementation 1 (MAC SDUs that can be cascaded have a same LCID and same L, and L of these MAC SDUs is the same as a default L corresponding to the LCID).

For the implementation 3: Similar to the definition in the implementation 2, but the MAC SDUs that can be cascaded are defined as: MAC SDUs having the same LCID and L, where L of the MAC SDUs is the same as default L corresponding to the LCID, and the LCID of the MAC SDUs is the same as an LCID corresponding to the grant slot.

For the implementation 4:
(A) If non-cascading is used (a standard supports a cascading format, but a cascading condition is not satisfied (for example, a quantity of MAC SDUs that satisfy the cascading condition is less than M, or is less than or equal to M); or a standard does not support a cascading format), LCIDs of the MAC SDUs are the same as an LCID corresponding to the grant slot, and L of the MAC SDUs is the same as default L corresponding to the LCID, the new format is used.
(B) An old format defined in an existing standard is used.
(C) A non-cascading (a standard supports a cascading format, but a cascading condition is not satisfied (for example, a quantity of MAC SDUs that satisfy the cascading condition is less than M, or is less than or equal to M); or a standard does not support a cascading format), and LCIDs of the MAC SDUs are different from an LCID corresponding to the grant slot (if configuration of the LCID and default L is supported), or an LCID is always carried (if configuration of the LCID and default L is not supported) and L of the MAC SDUs is the same as default L corresponding to the LCID, the new format is used.

For the manner 5:
(A) When the subheader format is B(O)/N/L, and a quantity of MAC SDUs that satisfy a cascading condition is greater than M, or is greater than or equal to M (optionally, M is configured by the base station for the UE), the new format is selected (A cascading condition is met: To-be-cascaded MAC SDUs have same L, and a corresponding LCID is the same as an LCID corresponding to the grant slot).
(B) When the subheader format is B(O)/N, the case is the same as A (A cascading condition is met: LCIDs of to-be-cascaded MAC SDUs are the same as an LCID corresponding to the grant slot).
(C) When the subheader format is B(O)/N/L/L..., the case is the same as B.

In conclusion, the method 1000 provides three possible implementations. In a scenario in which a plurality of MAC SDUs have a same LCID and same L, a new MAC subheader format (B/LCID/N/L, B/LCID/N, or B/N) corresponding to the MAC SDUs is designed, and the MAC SDUs having the same LCID and L are cascaded and share a newly designed MAC subheader, thereby reducing air interface overheads caused by the LCID and L.

With reference to FIG. 5 to FIG. 11, the foregoing describes in detail the simplified MAC layer design method provided in this application. A newly defined MAC subheader format is used, to reduce air interface overheads and reduce processing latency by reducing L and/or LCID.

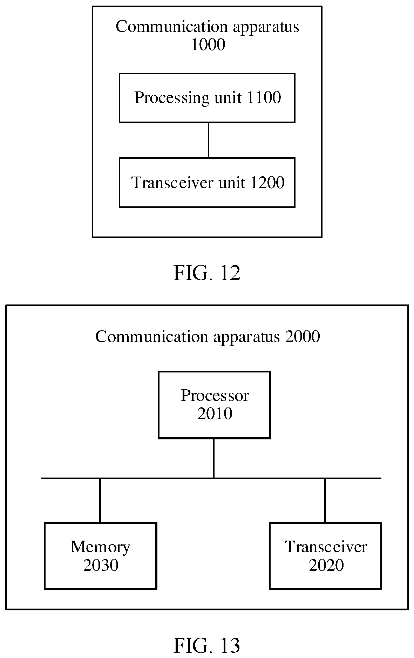

With reference to FIG. 12 to FIG. 15, the following describes in detail a simplified MAC layer design apparatus provided in this application. It should be understood that the descriptions of the method embodiments correspond to descriptions of the apparatus embodiments. Therefore, for parts that are not described in detail, refer to the descriptions in the foregoing method embodiments.

The foregoing mainly describes the solutions provided in embodiments of this application from a perspective of interaction between network elements. It may be understood that, to implement the foregoing functions, each network element such as a transmitting end device or a receiving end device includes a corresponding hardware structure and/or software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, function module division may be performed on the transmitting end device or the receiving end device based on the foregoing method example. For example, each function module may be obtained through division corresponding to each function, or two or more functions may be integrated in one processing module. The integrated module may be implemented in a form of hardware, or may be implemented in a form of a software function module. It should be noted that, in embodiments of this application, module division is an example, and is merely a logical function division. In actual implementation, another division manner may be used. An example in which each function module is obtained through division based on each corresponding function is used below for description.

FIG. 12 is a schematic block diagram of a communication apparatus according to an embodiment of this application. As shown in FIG. 12, the communication apparatus 1000 may include a processing unit 1100 and a transceiver unit 1200.

Optionally, the communication apparatus 1000 may correspond to the terminal device in the foregoing method embodiments, for example, may be the terminal device, or may be a component (such as a circuit, a chip, or a chip system) disposed in the terminal device.

For example, the processing unit 1100 is configured to determine a first format, where the first format includes a logical channel identifier, the logical channel identifier corresponds to a length value of a media access control service data unit, and the first format is a subheader format of the media access control service data unit.

The transceiver unit 1200 is configured to send the media access control service data unit based on the first format.

It should be understood that the communication apparatus 1000 may correspond to the terminal device in the method 500/600/800/1000 according to embodiments of this application. The communication apparatus 1000 may include units configured to perform a method performed by the terminal device in the method 500 in FIG. 5, the method 600 in FIG. 6, the method 800 in FIG. 8, or the method 1000 in FIG. 10. In addition, the units in the communication apparatus 1000 and the foregoing other operations and/or functions are respectively used to implement a corresponding procedure of the method 500 in FIG. 5, the method 600 in FIG. 6, the method 800 in FIG. 8, or the method 1000 in FIG. 10.

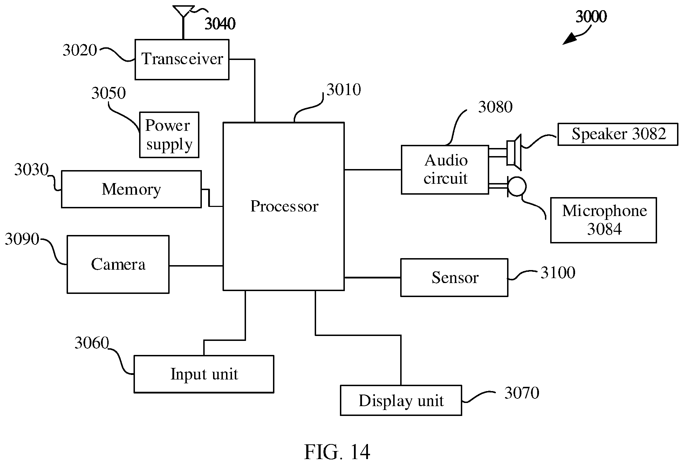

It should be further understood that when the communication apparatus 1000 is a terminal device, the transceiver unit 1200 in the communication apparatus 1000 may be implemented by a transceiver, for example, may correspond to a transceiver 2020 in a communication apparatus 2000 shown in FIG. 13 or a transceiver 3020 in a terminal device 3000 shown in FIG. 14. The processing unit 1100 in the communication apparatus 1000 may be implemented by at least one processor, for example, may correspond to a processor 2010 in the communication apparatus 2000 shown in FIG. 13 or a processor 3010 in the terminal device 3000 shown in FIG. 14.

It should be further understood that when the communication apparatus 1000 is a chip or a chip system disposed in a terminal device, the transceiver unit 1200 in the communication apparatus 1000 may be implemented by an input/output interface, a circuit, or the like, and the processing unit 1100 in the communication apparatus 1000 may be implemented by a processor, a microprocessor, an integrated circuit, or the like integrated into the chip or the chip system.

Optionally, the communication apparatus 1000 may correspond to the network device in the foregoing method embodiments, for example, may be the network device, or may be a component (for example, a circuit, a chip, or a chip system) disposed in the network device.

For example, the transceiver unit 1200 is configured to receive a media access control service data unit, where the media access control service data unit corresponds to a first format, the first format includes a logical channel identifier, the logical channel identifier corresponds to a length value of the media access control service data unit, and the first format is a subheader format of the media access control service data unit.

The processing unit 1100 is configured to parse the media access control service data unit based on the first format.

It should be understood that the communication apparatus 1000 may correspond to the network device in the method 500/600/800/1000 according to embodiments of this application. The communication apparatus 1000 may include units configured to perform a method performed by the network device in the method 500 in FIG. 5, the method 600 in FIG. 6, the method 800 in FIG. 8, or the method 1000 in FIG. 10. In addition, the units in the communication apparatus 1000 and the foregoing other operations and/or functions are respectively used to implement a corresponding procedure of the method 500 in FIG. 5, the method 600 in FIG. 6, the method 800 in FIG. 8, or the method 1000 in FIG. 10.

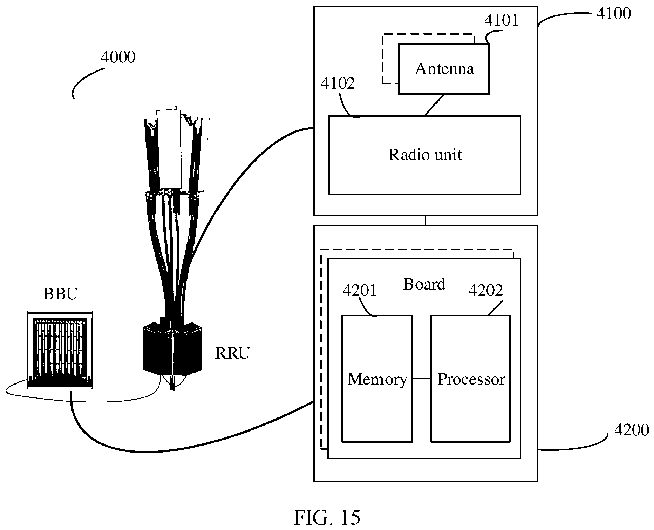

It should be further understood that when the communication apparatus 1000 is a network device, the transceiver unit 1200 in the communication apparatus 1000 may be implemented by a transceiver, for example, may correspond to a transceiver 2020 in a communication apparatus 2000 shown in FIG. 13 or a remote radio unit (remote radio unit, RRU) 4100 in a network device 4000 shown in FIG. 15. The processing unit 1100 in the communication apparatus 1000 may be implemented by at least one processor, for example, may correspond to a processor 2010 in the communication apparatus 2000 shown in FIG. 13 or a processing unit 4200 or a processor 4202 in the network device 4000 shown in FIG. 15.

It should be further understood that when the communication apparatus 1000 is a chip or a chip system disposed in a network device, the transceiver unit 1200 in the communication apparatus 1000 may be implemented by an input/output interface, a circuit, or the like; and the processing unit 1100 in the communication apparatus 1000 may be implemented by a processor, a microprocessor, an integrated circuit, or the like integrated in the chip or chip system.

FIG. 13 is another schematic block diagram of the communication apparatus 2000 according to an embodiment of this application. As shown in FIG. 13, the communication apparatus 2000 includes the processor 2010, the transceiver 2020, and a memory 2030. The processor 2010, the transceiver 2020, and the memory 2030 communicate with each other via an internal connection path. The memory 2030 is configured to store instructions. The processor 2010 is configured to execute the instructions stored in the memory 2030, to control the transceiver 2020 to send a signal and/or receive a signal.

It should be understood that the communication apparatus 2000 may correspond to the network device in the foregoing method embodiments, and may be configured to perform the steps and/or the procedures performed by the network device in the foregoing method embodiments.

Optionally, the memory 2030 may include a read-only memory and a random access memory, and provide instructions and data to the processor. A part of the memory may further include a non-volatile random access memory. The memory 2030 may be a separate component, or may be integrated in the processor 2010. The processor 2010 may be configured to execute the instructions stored in the memory 2030. When the processor 2010 executes the instructions stored in the memory, the processor 2010 is configured to perform the steps and/or the procedures corresponding to the network device or the terminal device in the foregoing method embodiments.

Optionally, the communication apparatus 2000 is the network device in the embodiment provided in the method 500 in FIG. 5, the method 600 in FIG. 6, the method 800 in FIG. 8, or the method 1000 in FIG. 10.

The transceiver 2020 may include a transmitter and a receiver. The transceiver 2020 may further include an antenna. There may be one or more antennas. The processor 2010, the memory 2030, and the transceiver 2020 may be devices integrated in different chips. For example, the processor 2010 and the memory 2030 may be integrated in a baseband chip, while the transceiver 2020 may be integrated in a radio frequency chip. The processor 2010, the memory 2030, and the transceiver 2020 may alternatively be devices integrated in a same chip. This is not limited in this application.

Optionally, the communication apparatus 2000 is a component disposed in the network device, for example, a circuit, a chip, or a chip system.

The transceiver 2020 may alternatively be a communication interface, for example, an input/output interface or a circuit. The transceiver 2020, the processor 2010, and the memory 2020 may all be integrated in a same chip, for example, integrated in a baseband chip.

It should be understood that the device 2000 may further correspond to the terminal device (for example, UE) in the foregoing method embodiments, and may be configured to perform the steps and/or the procedures performed by the terminal device in the foregoing method embodiments.

Optionally, the memory 2030 may include a read-only memory and a random access memory, and provide instructions and data to the processor. A part of the memory may further include a non-volatile random access memory. The memory 2030 may be a separate component, or may be integrated in the processor 2010. The processor 2010 may be configured to execute the instructions stored in the memory 2030. When the processor 2010 executes the instructions stored in the memory, the processor 2010 is configured to perform the steps and/or the procedures corresponding to the terminal device in the foregoing method embodiments.

Optionally, the communication apparatus 2000 is the terminal device in the method 400/500/600/700 in the foregoing embodiments.

The transceiver 2020 may include a transmitter and a receiver. The transceiver 2020 may further include an antenna. There may be one or more antennas. The processor 2010, the memory 2030, and the transceiver 2020 may be devices integrated in different chips. For example, the processor 2010 and the memory 2030 may be integrated in a baseband chip, while the transceiver 2020 may be integrated in a radio frequency chip. The processor 2010, the memory 2030, and the transceiver 2020 may alternatively be devices integrated in a same chip. This is not limited in this application.

Optionally, the device 2000 is a component disposed in a terminal device, for example, a circuit, a chip, or a chip system.

The transceiver 2020 may alternatively be a communication interface, for example, an input/output interface or a circuit. The transceiver 2020, the processor 2010, and the memory 2020 may all be integrated in a same chip, for example, integrated in a baseband chip.

FIG. 14 is a schematic diagram of a structure of the terminal device 3000 according to an embodiment of this application. The terminal device 3000 may be used in the system shown in FIG. 1, and performs a function of the terminal device in the foregoing method embodiments. As shown in FIG. 14, the terminal device 3000 includes the processor 3010 and the transceiver 3020. Optionally, the terminal device 3000 further includes a memory 3030. The processor 3010, the transceiver 3020, and the memory 3030 may communicate with each other via an internal connection path, to transfer a control signal and/or a data signal. The memory 3030 is configured to store a computer program. The processor 3010 is configured to invoke the computer program from the memory 3030 and run the computer program, to control the transceiver 3020 to receive/send a signal. Optionally, the terminal device 3000 may further include an antenna 3040, configured to send, by using a radio signal, uplink data or uplink control signaling output by the transceiver 3020.

The processor 3010 and the memory 3030 may be combined into a processing apparatus. The processor 3010 is configured to execute program code stored in the memory 3030, to implement the foregoing function. During specific implementation, the memory 3030 may be alternatively integrated in the processor 3010, or may be independent of the processor 3010. The processor 3010 may correspond to the processing unit 1100 in FIG. 12 or the processor 2010 in FIG. 13. The transceiver 3020 may correspond to the transceiver unit 1200 in FIG. 12 or the transceiver 2020 in FIG. 13. The transceiver 3020 may include a receiver (which is also referred to as a receiver machine or a receiver circuit) and a transmitter (which is also referred to as a transmitter machine or a transmitter circuit). The receiver is configured to receive a signal, and the transmitter is configured to transmit a signal.

It should be understood that the terminal device 3000 shown in FIG. 14 can implement the processes related to the terminal device in the method embodiment shown in FIG. 5, FIG. 6, FIG. 8, or FIG. 10. Operations and/or functions of the modules in the terminal device 3000 are separately intended to implement corresponding procedures in the foregoing method embodiments. For details, refer to the descriptions in the foregoing method embodiments. To avoid repetition, detailed descriptions are properly omitted herein.

The processor 3010 may be configured to perform an action that is implemented inside the terminal device and that is described in the foregoing method embodiments. The transceiver 3020 may be configured to perform an action that is of the terminal device sending information to or receiving information from the network device and that is described in the foregoing method embodiments. For details, refer to the descriptions in the foregoing method embodiments. Details are not described herein again.

Optionally, the terminal device 3000 may further include a power supply 3050, configured to supply power to various devices or circuits in the terminal device.

In addition, to improve functions of the terminal device, the terminal device 3000 may further include one or more of an input unit 3060, a display unit 3070, an audio circuit 3080, a camera 3090, a sensor 3100, and the like. The audio circuit may further include a speaker 3082, a microphone 3084, and the like.

FIG. 15 is a schematic diagram of a structure of a network device according to an embodiment of this application. For example, FIG. 15 may be a schematic diagram of a structure of a base station. The base station 4000 may be used in the system shown in FIG. 1, and performs a function of the network device in the foregoing method embodiments. As shown in FIG. 15, the base station 4000 may include one or more radio units, such as a remote radio unit (remote radio unit, RRU) 4100 and one or more baseband units (BBU) (which may also be referred to as a distributed unit (DU)) 4200. The RRU 4100 may be referred to as a transceiver unit, and may correspond to the transceiver unit 1200 in FIG. 12 or the transceiver 2020 in FIG. 13.

Optionally, the RRU 4100 may also be referred to as a transceiver machine, a transceiver circuit, a transceiver, or the like, and may include at least one antenna 4101 and a radio frequency unit 4102. Optionally, the RRU 4100 may include a receiving unit and a sending unit. The receiving unit may correspond to a receiver (which is also referred to as a receiver machine or a receiver circuit). The sending unit may correspond to a transmitter (which is also referred to as a transmitter machine or a transmitter circuit). The RRU 4100 is mainly configured to receive and send a radio frequency signal and perform conversion between the radio frequency signal and a baseband signal, for example, configured to send indication information to a terminal device. The BBU 4200 is mainly configured to perform baseband processing, control the base station, and the like. The RRU 4100 and the BBU 4200 may be physically disposed together, or may be physically disposed separately, that is, a distributed base station.

The BBU 4200 is a control center of the base station, may also be referred to as a processing unit, may correspond to the processing unit 1100 in FIG. 12 or the processor 2010 in FIG. 13, and is mainly configured to complete a baseband processing function, such as channel coding, multiplexing, modulation, and spectrum spreading. For example, the BBU (the processing unit) may be configured to control the base station to perform an operation procedure related to the network device in the foregoing method embodiments, for example, generate the foregoing indication information.

In an example, the BBU 4200 may include one or more boards. A plurality of boards may jointly support a radio access network (for example, an LTE network) of a single access standard, or may separately support radio access networks (for example, an LTE network, a 5G network, or another network) of different access standards. The BBU 4200 further includes a memory 4201 and a processor 4202. The memory 4201 is configured to store necessary instructions and necessary data. The processor 4202 is configured to control the base station to perform a necessary action, for example, configured to control the base station to perform an operation procedure related to the network device in the foregoing method embodiments. The memory 4201 and the processor 4202 may serve one or more boards. In other words, a memory and a processor may be disposed on each board. Alternatively, a plurality of boards may share a same memory and a same processor. In addition, a necessary circuit may further be disposed on each board.

It should be understood that the base station 4000 shown in FIG. 15 can implement the processes related to the network device in the method embodiment shown in FIG. 5, FIG. 6, FIG. 8, or FIG. 10. Operations and/or functions of the modules in the base station 4000 are separately intended to implement corresponding procedures in the foregoing method embodiments. For details, refer to the descriptions in the foregoing method embodiments. To avoid repetition, detailed descriptions are properly omitted herein.

The BBU 4200 may be configured to perform an action that is implemented inside the network device and that is described in the foregoing method embodiments. The RRU 4100 may be configured to perform an action of sending to or receiving from the terminal device by the network device that is described in the foregoing method embodiments. For details, refer to the descriptions in the foregoing method embodiments. Details are not described herein again.

It should be understood that the base station 4000 shown in FIG. 15 is merely a possible form of the network device, and should not constitute any limitation on this application. The method provided in this application is applicable to a network device in another form. For example, the network device includes an AAU, and may further include a CU and/or a DU; includes a BBU and an adaptive radio unit (adaptive radio unit, ARU); or includes a BBU. Alternatively, the network device may be customer premises equipment (customer premises equipment, CPE), or may be in another form. A specific form of the network device is not limited in this application.

The CU and/or the DU may be configured to perform an action that is implemented inside the network device and that is described in the foregoing method embodiments, and the AAU may be configured to perform an action of sending to or receiving from the terminal device by the network device that is described in the foregoing method embodiments. For details, refer to the descriptions in the foregoing method embodiments. Details are not described herein again.

This application further provides a processing apparatus, including at least one processor. The at least one processor is configured to execute a computer program stored in a memory, so that the processing apparatus performs the method performed by the terminal device or the network device in any one of the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

An embodiment of this application further provides a processing apparatus, including a processor and a communication interface. The communication interface is coupled to the processor. The communication interface is configured to input and/or output information. The information includes at least one of instructions and data. The processor is configured to execute a computer program, so that the processing apparatus performs the method performed by the terminal device or the network device in any one of the foregoing method embodiments.

An embodiment of this application further provides a processing apparatus, including a processor and a memory. The memory is configured to store a computer program. The processor is configured to invoke the computer program from the memory and run the computer program, so that the processing apparatus performs the method performed by the terminal device or the network device in any one of the foregoing method embodiments.

According to the methods provided in embodiments of this application, this application further provides a computer program product. The computer program product includes computer program code. When the computer program code is run on a computer, the computer is enabled to perform the method performed by the terminal device or the network device in the embodiment shown in FIG. 5, FIG. 6, FIG. 8, or FIG. 10.

According to the methods provided in embodiments of this application, this application further provides a computer-readable storage medium. The computer-readable storage medium stores program code. When the program code is run on a computer, the computer is enabled to perform the method performed by the terminal device or the network device in the embodiment shown in FIG. 5, FIG. 6, FIG. 8, or FIG. 10.

According to the method provided in embodiments of this application, this application further provides a system. The system includes the foregoing one or more terminal devices and the foregoing one or more network devices.

The network device and the terminal device in the foregoing apparatus embodiments completely correspond to the network device and the terminal device in the method embodiments. A corresponding module or unit performs a corresponding step. For example, the communication unit (the transceiver) performs a receiving or sending step in the method embodiments, and a step other than the sending step and the receiving step may be performed by the processing unit (the processor). For a function of a specific unit, refer to a corresponding method embodiment. There may be one or more processors.

In the foregoing embodiments, the terminal device may be used as an example of a receiving device, and the network device may be used as an example of a sending device. However, this shall not constitute any limitation on this application. For example, alternatively, the sending device and the receiving device may be both terminal devices or the like. Specific types of the sending device and the receiving device are not limited in this application.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The method disclosed with reference to embodiments of this application may be directly performed and completed by a hardware decoding processor, or may be performed and completed by using a combination of hardware and a software module in a decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It should be understood that, the processor in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA), or another programmable logic device, a transistor logic device, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded or executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more packets (for example, data from two components interacting with another component in a local system, a distributed system, and/or across a network such as the internet interacting with other systems by using the signal).

A person of ordinary skill in the art may be aware that, with reference to the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (ROM), a random access memory (RAM), a magnetic disk, or an optical disc.

In embodiments of this application, the terminal device or the network device includes a hardware layer, an operating system layer running on the hardware layer, and an application layer running on the operating system layer. The hardware layer includes hardware such as a central processing unit CPU, a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a function module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include, but is not limited to, a magnetic storage device (for example, a hard disk, a floppy disk, or a magnetic tape), an optical disc (for example, a compact disc (compact disc, CD), or a digital versatile disk (DVD)), a smart card, and a flash storage device (for example, an erasable programmable read-only memory EPROM, a card, a stick or a key drive). In addition, various storage media described in this specification may represent one or more devices and/or other machine-readable media that are configured to store information. The term "machine readable media" may include but is not limited to a radio channel, and various other media that can store, contain and/or carry instructions and/or data.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining a first format, wherein the first format comprises a logical channel identifier, the logical channel identifier corresponds to a length value of a media access control service data unit, and the first format is a subheader format of the media access control service data unit; and
sending the media access control service data unit based on the first format.

2. The method according to claim 1, wherein before the sending the media access control service data unit, the method further comprises:
receiving first configuration information, wherein the first configuration information indicates that the length value of the media access control service data unit corresponds to the logical channel identifier.

3. The method according to claim 1, wherein before the sending the media access control service data unit, the method further comprises:
sending first information, wherein the first information indicates that the length value of the media access control service data unit corresponds to the logical channel identifier.

4. The method according to any one of claims 1 to 3, wherein the method further comprises:
sending first indication information, wherein the first indication information indicates a service mode, and the length value of the media access control service data unit corresponding to the service mode is fixed.

5. The method according to any one of claims 1 to 4, wherein when the length value of the media access control service data unit changes, the method comprises:
receiving second configuration information, wherein the second configuration information indicates that an updated length value of the media access control service data unit corresponds to the logical channel identifier.

6. The method according to claim 5, wherein the method further comprises:
sending second information, wherein the second information indicates that the service mode changes, and the second information comprises that the updated length value of the media access control service data unit corresponds to the logical channel identifier.

7. The method according to any one of claims 1 to 6, wherein the first format further comprises a type and/or a quantity of cascaded media access control service data units.

8. The method according to claim 7, wherein the method further comprises:
sending N cascaded media access control service data units based on the first format, wherein the N cascaded media access control service data units correspond to the first format, and N is a positive integer greater than or equal to 1.

9. The method according to claim 8, wherein the method further comprises:
sending a media access control protocol data unit based on the first format and the N cascaded media access control service data units.

10. A communication method, comprising:
receiving a media access control service data unit, wherein the media access control service data unit corresponds to a first format, the first format comprises a logical channel identifier, the logical channel identifier corresponds to a length value of the media access control service data unit, and the first format is a subheader format of the media access control service data unit; and
parsing the media access control service data unit based on the first format.

11. The method according to claim 10, wherein before the receiving a media access control service data unit, the method further comprises:
determining first configuration information, wherein the first configuration information indicates that the length value of the media access control service data unit corresponds to the logical channel identifier; and
sending the first configuration information.

12. The method according to claim 10, wherein before the receiving a media access control service data unit, the method further comprises:
receiving first information, wherein the first information indicates that the length value of the media access control service data unit corresponds to the logical channel identifier.

13. The method according to any one of claims 10 to 12, wherein the method further comprises:
receiving first indication information, wherein the first indication information indicates a service mode, and the length value of the media access control service data unit corresponding to the service mode is fixed.

14. The method according to any one of claims 10 to 13, wherein when the length value of the media access control service data unit changes, the method comprises:
sending second configuration information, wherein the second configuration information indicates that an updated length value of the media access control service data unit corresponds to the logical channel identifier.

15. The method according to claim 14, wherein the method further comprises:
receiving second information, wherein the second information indicates that the service mode changes, and the second information comprises that the updated length value of the media access control service data unit corresponds to the logical channel identifier.

16. The method according to any one of claims 10 to 15, wherein the parsing the media access control service data unit based on the first format comprises:
determining the first configuration information and/or the first indication information based on the logical channel identifier;
determining the length value of the media access control service data unit based on the first configuration information and/or the first indication information; and
parsing the media access control service data unit based on the logical channel identifier and the length value of the media access control service data unit.

17. The method according to any one of claims 10 to 16, wherein the first format further comprises a type and/or a quantity of cascaded media access control service data units.

18. The method according to claim 17, wherein the parsing the media access control service data unit based on the first format comprises:
determining, based on the type, that the subheader format of the media access control service data unit is the first format; and
parsing the media access control service data unit based on the logical channel identifier, the length value of the media access control service data unit, and the type and/or the quantity of cascaded media access control service data units.

19. A communication method, comprising:
determining a second format, wherein the second format comprises a length value of a media access control service data unit, and the second format is a subheader format corresponding to the media access control service data unit; and
sending the media access control service data unit in a first grant slot based on the second format, wherein the first grant slot corresponds to a logical channel identifier.

20. The method according to claim 19, wherein
sending second indication information, wherein the second indication information indicates that the first grant slot corresponds to the logical channel identifier.

21. The method according to claim 19 or 20, wherein the second format further comprises a type and/or a quantity of cascaded media access control service data units.

22. A communication method, comprising:
receiving a media access control service data unit in a first grant slot, wherein the media access control service data unit corresponds to a second format, the second format comprises a length value of the media access control service data unit, the first grant slot corresponds to a logical channel identifier, and the second format is a subheader format corresponding to the media access control service data unit; and
parsing the media access control service data unit based on the second format, and sending the media access control service data unit to a data radio bearer DRB entity or an RLC/PDCP entity corresponding to an upper layer.

23. The method according to claim 22, wherein the method further comprises:
receiving second indication information, wherein the second indication information indicates that the first grant slot corresponds to the logical channel identifier.

24. The method according to claim 22 or 23, wherein the parsing the media access control service data unit based on the second format comprises:
determining the logical channel identifier based on the first grant slot, wherein the logical channel identifier corresponds to the media access control service data unit; and
parsing the media access control service data unit based on the logical channel identifier and the length value of the media access control service data unit.

25. The method according to any one of claims 22 to 24, wherein the second format further comprises a type and/or a quantity of cascaded media access control service data units.

26. The method according to claim 25, wherein the parsing the media access control service data unit based on the second format comprises:
determining, based on the type, that the subheader format of the media access control service data unit is the second format; and
parsing the media access control service data unit based on the logical channel identifier, the length value of the media access control service data unit, and the type and/or the quantity of cascaded media access control service data units.

27. A communication method, comprising:
determining a third format, wherein the third format comprises a quantity of cascaded media access control service data units, and the third format corresponds to N cascaded media access control service data units; and
sending the N cascaded media access control service data units based on the third format, wherein N is a positive integer greater than or equal to 1.

28. The method according to claim 27, wherein the third format further comprises at least one of the following:
a type;
a logical channel identifier; or
a length value of the media access control service data unit.

29. The method according to claim 27 or 28, wherein the method further comprises:
sending N cascaded media access control protocol data units based on the third format and the N cascaded media access control service data units.

30. The method according to any one of claims 27 to 29, wherein before the sending the N cascaded media access control service data units, the method further comprises:
receiving second configuration information, wherein the second configuration information indicates that the length value of the media access control service data unit corresponds to the logical channel identifier.

31. The method according to any one of claims 28 to 30, wherein the sending the N cascaded media access control service data units based on the third format comprises:
sending the N cascaded media access control service data units in a second grant slot based on the third format, wherein the second grant slot corresponds to the logical channel identifier.

32. A communication method, comprising:
receiving a media access control service data unit, wherein the media access control service data unit corresponds to a third format, the third format comprises a quantity of cascaded media access control service data units, the third format corresponds to N cascaded media access control service data units, and N is a positive integer greater than or equal to 1; and
parsing the N cascaded media access control service data units based on the third format.

33. The method according to claim 32, wherein the method further comprises:
receiving N cascaded media access control protocol data units based on the third format and the N cascaded media access control service data units.

34. The method according to claim 32 or 33, wherein the third format further comprises at least one of the following:
a type;
a logical channel identifier; or
a length value of the media access control service data unit.

35. The method according to any one of claims 32 to 34, wherein before the receiving a media access control service data unit, the method further comprises:
determining second configuration information, wherein the second configuration information indicates that the length value of the media access control service data unit corresponds to the logical channel identifier; and
sending the second configuration information.

36. The method according to claim 34 or 35, wherein the receiving a media access control service data unit comprises:
receiving the N cascaded media access control service data units in a second grant slot, wherein the second slot corresponds to the logical channel identifier.

37. The method according to any one of claims 34 to 36, wherein the parsing the N cascaded media access control service data units based on the third format comprises:
determining the length value of the media access control service data unit based on the second configuration information;
determining the logical channel identifier based on the second grant slot;
determining, based on the type, that a subheader format of the media access control service data unit is the third format; and
parsing the media access control service data unit based on the logical channel identifier, the length value of the media access control service data unit, and the type and/or the quantity of cascaded media access control service data units.

38. A communication apparatus, comprising:
a unit configured to implement the method according to any one of claims 1 to 9;
a unit configured to implement the method according to any one of claims 19 to 21; or
a unit configured to implement the method according to any one of claims 27 to 31.

39. A communication apparatus, comprising:
a unit configured to implement the method according to any one of claims 10 to 18;
a unit configured to implement the method according to any one of claims 22 to 26; or
a unit configured to implement the method according to any one of claims 32 to 37.

40. A communication apparatus, comprising:
a processor, wherein the processor is coupled to a memory; and
the processor is configured to execute a computer program stored in the memory, so that the apparatus performs the method according to any one of claims 1 to 9, 19 to 21, or 27 to 31, or the apparatus performs the method according to any one of claims 10 to 18, 22 to 26, or 32 to 37.

41. A computer program product, wherein when the computer program product is executed on a computer, the computer is enabled to perform the method according to any one of claims 1 to 9, 19 to 21, or 27 to 31, or the computer is enabled to perform the method according to any one of claims 10 to 18, 22 to 26, or 32 to 37.

42. A computer-readable storage medium, wherein
the computer-readable storage medium stores a computer program; and when the computer program is run, a computer is enabled to perform the method according to any one of claims 1 to 9, 19 to 21, or 27 to 31, or the computer is enabled to perform the method according to any one of claims 10 to 18, 22 to 26, or 32 to 37.
